# EUROPEAN PATENT APPLICATION

(11) **EP 4 640 722 A1**
(43) Date of publication of application: **29.10.2025**
(21) Application number: 23906819.0
(22) Date of filing: 12.12.2023
(51) Int. Cl.: C08F 283/06, C08F 2/44, C08G 65/329, C08L 25/14, C08L 33/00, C08L 71/02, H01M 4/13, H01M 4/139, H01M 4/62

(54) **COMPOSITE PARTICLES, BINDER COMPOSITION FOR NONAQUEOUS SECONDARY BATTERIES AND NONAQUEOUS SECONDARY BATTERY ELECTRODE**

(30) Priority: 19.12.2022 JP 2022202378
(71) Applicant: Resonac Corporation, Tokyo 105-7325 (JP)
(72) Inventor: KAWAHARA, Yuta, Tokyo 105-7325 (JP); IKEHATA, Ryohsuke, Tokyo 105-7325 (JP); HORIKOSHI, Hideo, Tokyo 105-7325 (JP)
(74) Representative: Strehl & Partner mbB
(86) International application number: PCT/JP2023/044421
(87) International publication number: WO 2024/135454

(57) **Abstract**

The composite particle includes a copolymer and a polyrotaxane, the copolymer having a first structural unit derived from a monomer (al) and a second structural unit derived from a monomer (a2), the monomer (a1) is a nonionic compound having only one ethylenically unsaturated bond, the monomer (a2) is a compound having a carboxy group and only one ethylenically unsaturated bond, and the polyrotaxane has a cyclic molecule having a cyclic skeleton and a chain molecule that penetrates an opening of the cyclic molecule and has stopper groups at both ends, and does not contain an ethylenically unsaturated bond.

## Description

### TECHNICAL FIELD

The present invention relates to composite particles, a binder composition for non-aqueous secondary batteries, a slurry for non-aqueous secondary battery electrodes, a non-aqueous secondary battery electrode, a non-aqueous secondary battery, and a method for producing the composite particles.

This application claims priority based on Japanese Patent Application No. 2022-202378, filed on December 19, 2022, the contents of which are incorporated herein by reference.

### BACKGROUND ART

Non-aqueous secondary batteries can be made small and lightweight, and are therefore widely used as power sources for notebook computers, mobile phones, power tools, electronic and communication devices, etc. In recent years, non-aqueous secondary batteries have also been used as power sources for electric vehicles and hybrid vehicles, etc. A representative example of a non-aqueous secondary battery is the lithium-ion secondary battery.

A non-aqueous secondary battery includes a positive electrode using a metal oxide or the like as an active material, a negative electrode using a carbon material such as graphite as an active material, and an electrolyte. The positive electrode and the negative electrode each include a current collector and an electrode active material layer formed on the current collector. The electrode active material layer usually includes a binder that bonds the active materials together and between the active materials and the current collector, thereby fixing the electrode active material layer on the current collector. Conventionally, binders used in non-aqueous secondary batteries are known that are described in Patent Documents 1 and 2.

Patent Document 1 describes a binder composition for secondary battery electrodes, which contains 100 parts by mass of an aqueous dispersion of at least one polymer selected from the group consisting of a styrene-butadiene copolymer latex and an acrylic emulsion, and 1 to 20 parts by mass of a nonionic surfactant.

Patent Document 2 describes a binder for lithium ion secondary battery electrodes having a glass transition temperature of 30°C or lower, which is obtained by emulsion polymerization of ethylenically unsaturated monomers containing, as essential components, 15 to 70 mass % of styrene relative to the total amount of ethylenically unsaturated monomers, an ethylenically unsaturated carboxylic acid ester, an ethylenically unsaturated carboxylic acid, and an internal crosslinking agent, in the presence of a surfactant.

Patent Document 3 describes a resin emulsion for paint that can be suitably used for architectural exterior paints, etc. Patent Document 3 discloses a resin emulsion for paint in which a resin constituting the resin emulsion for paint has a glass transition temperature of 0°C or higher and contains 0.01 to 4 mass % of a structural unit derived from a modified polyrotaxane, and the modified polyrotaxane has a structure in which a functional group having a radical polymerizable group is bonded to a cyclic molecule of the polyrotaxane having a cyclic molecule and a chain molecule that penetrates the opening of the cyclic molecule and has stopper groups at both ends.

### CITATION LIST

### PATENT DOCUMENT

Patent Document 1: Japanese Patent Application Publication No. 2014-239070 (A)
Patent Document 2: Japanese Patent Application Publication No. 2011-243464 (A)
Patent Document 3: Japanese Patent Application Publication No. 2019-116594 (A)

### SUMMARY OF INVENTION

### TECHNICAL PROBLEM

In recent years, there has been a strong demand for higher output, higher capacity, and longer life for non-aqueous secondary batteries, and there is a demand for binders used in non-aqueous secondary batteries that can improve the cycle characteristics of the non-aqueous secondary batteries having electrodes using the binders.

The present invention has been made in consideration of the above circumstances, and an object of the present invention is to provide composite particles that can be used as a binder material capable of forming an electrode from which a nonaqueous secondary battery having excellent cycle characteristics can be obtained, and a method for producing the composite particles.

Another object of the present invention is to provide a binder composition for non-aqueous secondary batteries that contains the composite particles of the present invention and can form an electrode that results in a non-aqueous secondary battery with excellent cycle characteristics; a slurry for non-aqueous secondary battery electrodes; a non-aqueous secondary battery electrode that results in a non-aqueous secondary battery with excellent cycle characteristics; and a non-aqueous secondary battery including the same.

### SOLUTION TO PROBLEM

The present invention includes the following aspects.
[1] A composite particle including a copolymer and a polyrotaxane, wherein
   the copolymer includes:
      a first structural unit derived from monomer (a1); and
      a second structural unit derived from monomer (a2),
   the monomer (a1) is a nonionic compound having only one ethylenically unsaturated bond,
   the monomer (a2) is a compound having a carboxy group and only one ethylenically unsaturated bond, and
   the polyrotaxane has a cyclic molecule with a cyclic skeleton and a chain molecule passing through an opening of the cyclic molecule and having stopper groups at both ends, the polyrotaxane being free of an ethylenically unsaturated bond.
[2] The composite particle according to [1], wherein at least a portion of the polyrotaxane is present within a particle structure consisting of chain molecules of the copolymer.
[3] The composite particle according to [1] or [2], wherein at least one of the cyclic skeletons in the cyclic molecule is a crown ether skeleton, a cyclic siloxane skeleton, or a cyclic oligosaccharide skeleton.
[4] The composite particle according to any one of [1] to [3], wherein at least one of the cyclic skeletons in the cyclic molecule is an α-cyclodextrin skeleton.
[5] The composite particle according to any one of [1] to [4], wherein at least one of the stopper groups is a dinitrophenyl group, an adamantyl group, a trityl group, or a derivative group of any of these groups.
[6] The composite particle according to any one of [1] to [5], wherein at least one of the stopper groups is an adamantyl group.
[7] The composite particle according to any one of [1] to [6], wherein the chain molecule is at least one selected from the group consisting of polyethylene glycol, polypropylene glycol, polyisoprene, polyisobutylene, polybutadiene, polytetrahydrofuran, polyacrylic acid ester, polydimethylsiloxane, polyethylene, and polypropylene.
[8] The composite particle according to any one of [1] to [7], wherein at least one of the chain molecules is polyethylene glycol.
[9] The composite particle according to any one of [1] to [8], wherein the chain molecule has a weight average molecular weight of 5,000 to 50,000.
[10] The composite particle according to any one of [1] to [9], wherein the content of the polyrotaxane relative to 100 parts by mass of the copolymer is 0.10 parts by mass or more and 50 parts by mass or less.
[11] The composite particle according to any one of [1] to [10], wherein a content of the second structural unit in all structural units of the copolymer is 0.10% by mass or more and 20% by mass or less.
[12] The composite particle according to any one of [1] to [11], wherein the copolymer includes a third structural unit derived from a monomer (a3), and the monomer (a3) is a compound having a plurality of independent ethylenically unsaturated bonds.
[13] The composite particle according to [12], wherein a content of the third structural unit in all structural units of the copolymer is 0.010% by mass or more and 10% by mass or less.
[14] The composite particle according to any one of [1] to [13], which is used as a binder for a non-aqueous secondary battery.
[15] A binder composition for a non-aqueous secondary battery, including the composite particle according to any one of [1] to [14] and an aqueous medium.
[16] The binder composition for a nonaqueous secondary battery according to [15], wherein an average particle diameter d50 of the composite particles is 0.18 µm or more and 1.0 µm or less.
[17] A slurry for a non-aqueous secondary battery electrode including the composite particles according to any one of [1] to [14], an electrode active material, and an aqueous medium.
[18] A non-aqueous secondary battery electrode including the composite particle according to any one of [1] to [14].
[19] A non-aqueous secondary battery including the non-aqueous secondary battery electrode according to [18].
[20] A method for producing composite particles, the method including: a polymerization step of emulsion-polymerizing raw material monomer (a) including monomer (a1) and monomer (a2) in presence of polyrotaxane, wherein
   the monomer (a1) is a nonionic compound having only one ethylenically unsaturated bond,
   the monomer (a2) is a compound having a carboxy group and having only one ethylenically unsaturated bond, and
   the polyrotaxane has a cyclic molecule having a cyclic skeleton and a chain molecule passing through an opening of the cyclic molecule and has stopper groups at both ends, the polyrotaxane being free of an ethylenically unsaturated bond.

### ADVANTAGEOUS EFFECT OF INVENTION

According to the present invention, it is possible to provide composite particles that can be used as a binder material capable of forming an electrode for obtaining a nonaqueous secondary battery having excellent cycle characteristics, and a method for producing the same.

Furthermore, according to the present invention, it is possible to provide a binder composition for non-aqueous secondary batteries, which can form electrodes for obtaining non-aqueous secondary batteries having excellent cycle characteristics, and a slurry for non-aqueous secondary battery electrodes.

Furthermore, according to the present invention, it is possible to provide a nonaqueous secondary battery electrode from which a nonaqueous secondary battery having excellent cycle characteristics can be obtained, and a nonaqueous secondary battery having excellent cycle characteristics including the same.

### BRIEF DESCRIPTION OF THE DRAWINGS

Figure 1 is a schematic cross-sectional view illustrating the function of a binder made of the binder composition for a nonaqueous secondary battery of the present invention in a nonaqueous secondary battery electrode of the present invention.
Figure 2 is a schematic diagram for explaining a polyrotaxane used as a raw material for the composite particle of the present invention.
Figure 3 is a schematic diagram for illustrating the state of a binder composition for a non-aqueous secondary battery containing the composite particles of the present embodiment and an aqueous medium.
Figure 4 is a schematic diagram for illustrating the state of a binder composition for a non-aqueous secondary battery containing another composite particle of the present embodiment and an aqueous medium.
Figure 5 is a schematic diagram for explaining the state of a composition containing copolymer particles, a polyrotaxane, and an aqueous medium.

### DESCRIPTION OF EMBODIMENTS

The present inventors have conducted extensive research as described below in order to solve the above problems and realize a binder capable of forming a nonaqueous secondary battery electrode that can provide a nonaqueous secondary battery with excellent cycle characteristics.

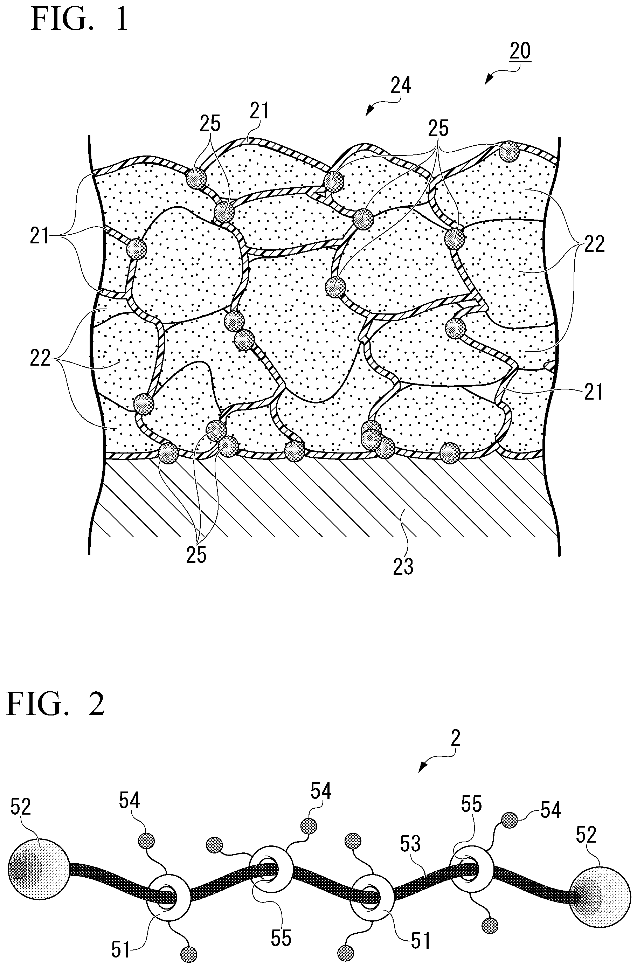

Figure 1 is a schematic cross-sectional view for illustrating the function of the binder made of the binder composition for a nonaqueous secondary battery of the present invention in the nonaqueous secondary battery electrode of the present invention.

The non-aqueous secondary battery electrode (hereinafter, sometimes referred to as "electrode") 20 shown in FIG. 1 includes a current collector 23 made of copper foil or the like, and an electrode active material layer 24 formed on the current collector 23. In one embodiment, the electrode active material layer 24 includes an electrode active material 22, a thickener 21, and a binder 25.

The discharge capacity of a nonaqueous secondary battery including the electrode 20 decreases when the electrode active material layer 24 of the electrode 20 expands and contracts due to expansion and contraction of the electrode active material 22 accompanying use of the nonaqueous secondary battery, i.e. , charging and discharging, and peels off from the current collector 23. Even if the electrode active material layer 24 does not peel off from the current collector 23, the discharge capacity of the nonaqueous secondary battery decreases when the adhesion between the electrode active materials 22 and between the electrode active material 22 and the current collector 23 becomes insufficient due to expansion and contraction of the electrode active material 22, etc.

For this reason, it is preferable that the binder 25 is capable of maintaining the binding between the electrode active materials 22 and between the electrode active material 22 and the current collector 23 for a long period of time, and capable of forming an electrode 20 in which the electrode active material layer 24 is not easily peeled off from the current collector 23.

However, in the conventional technology, the toughness of the binder 25 is insufficient, and the binder 25 cannot follow the expansion and contraction of the electrode active material 22 that accompanies charging and discharging.

The multiple electrode active materials 22 contained in the electrode active material layer 24 expand and contract in random directions. For this reason, most of the binder 25 contained in the electrode active material layer 24 is disposed between the electrode active materials 22 that expand and contract in different directions, and between the electrode active materials 22 and the current collector 23 that expand and contract in different directions. Therefore, unless the binder 25 has sufficient conformity to each of the multiple materials that expand and contract in different directions and are in contact with each other via the binder 25, good binding properties cannot be obtained.

In contrast, for example, when a coating film containing a binder but not containing the electrode active material 22 is formed on a substrate, the binder in the coating film only needs to follow the direction of expansion and contraction of the substrate. For this reason, even if a binder can be used as a material for a coating film that is difficult to peel off from the substrate, it does not necessarily have a followability sufficient to obtain sufficient binding between the electrode active materials 22 and between the electrode active material 22 and the current collector 23, and it does not necessarily mean that the electrode active material layer 24 containing this binder and the electrode active material 22 is difficult to peel off from the current collector 23.

For this reason, with conventional technology, it was difficult to realize a binder 25 that had good binding properties between the electrode active materials 22 and between the electrode active material 22 and the current collector 23, and that prevented the electrode active material layer 24 from peeling off from the current collector 23.

Therefore, the present inventors have focused on a binder containing a polymer obtained by copolymerizing a monomer (a1) consisting of a nonionic compound having only one ethylenically unsaturated bond and a monomer (a2) consisting of a compound having a carboxy group and only one ethylenically unsaturated bond, as a polymer that can easily give an electrode active material layer 24 that is not easily peeled off from a collector 23 made of copper foil or the like, and have conducted extensive research.

As a result, it has been found that a composite particle (P) containing a copolymer having a first structural unit derived from a monomer (a1), which is a nonionic compound having only one ethylenically unsaturated bond, and a second structural unit derived from a monomer (a2), which is a compound having a carboxy group and only one ethylenically unsaturated bond, and a polyrotaxane can be used as a binder for a nonaqueous secondary battery.

Figure 2 is a schematic diagram for explaining the polyrotaxane used as the raw material of the composite particle of the present invention.

The polyrotaxane 2 shown in Figure 2 includes a cyclic molecule 51 having a cyclic skeleton, and a chain molecule 53 which passes through an opening 55 of the cyclic molecule 51 and has stopper groups 52 at both ends. The polyrotaxane 2 does not include an ethylenically unsaturated bond. In Figure 2, the reference numeral 54 denotes a modifying group. The polyrotaxane 2 may not include the modifying group 54.

The composite particle (P) of this embodiment can be produced by copolymerizing the raw material monomer (a) containing the monomer (a1) and the monomer (a2) in the presence of the polyrotaxane 2 shown in Figure 2. **In** the composite particle (P) of this embodiment, the cyclic molecule 51 contained in the polyrotaxane 2 can move relative to the chain molecule 53. For this reason, when stress is applied to the composite particle (P), the cyclic molecule 51 of the polyrotaxane 2 in the composite particle (P) moves relative to the chain molecule 53 (pulley effect), and the stress is dispersed. In addition, when the cyclic molecule 51 in the composite particle (P) moves due to the stress applied to the composite particle (P) and the distance between the cyclic molecules 51 on the chain molecule 53 becomes close, the composite particle (P) of this embodiment exerts an air spring effect that tries to maintain the distance between the cyclic molecules 51 on the chain molecule 53 and restores.

For this reason, the binder made of the composite particles (P) of this embodiment has the ability to follow the expansion and contraction of the electrode active material 22 accompanying the use of a nonaqueous secondary battery, due to the polyrotaxane 2. As a result, it is presumed that the electrode active material layer 24 containing the binder 25 made of the composite particles (P) has the following functions <1> and <2>.
<1> Due to the conformability attributable to the polyrotaxane 2, the holding force of the electrode active material 22 by the binder 25 present between the electrode active materials 22 in the electrode active material layer 24 and between the electrode active material 22 and the current collector 23 is increased, and even if the electrode active material 22 expands and contracts, the binding between the electrode active materials 22 and between the electrode active material 22 and the current collector 23 is maintained for a long period of time.
<2> Even if the electrode active material layer 24 expands and contracts in accordance with the expansion and contraction of the electrode active material 22, the conformability due to the polyrotaxane 2 effectively exhibits the adhesion to the current collector 23 resulting from the structural units derived from the monomer (a1) and the monomer (a2) in the copolymer, making the electrode active material layer 24 less likely to peel off from the current collector 23.

Furthermore, when the electrode 20 is formed using the binder for a non-aqueous secondary battery, the binder 25 present between the electrode active materials 22 and between the electrode active material 22 and the current collector 23 contains the composite particles (P). Therefore, a synergistic effect between the copolymer contained in the composite particles (P) and the polyrotaxane 2 is fully exerted, resulting in an electrode 20 with better binding between the electrode active materials 22 and between the electrode active material 22 and the current collector 23. As a result, it is presumed that a non-aqueous secondary battery and a non-aqueous secondary battery electrode with excellent cycle characteristics can be obtained.

Here, an example of a binder composition for a non-aqueous secondary battery containing the composite particles (P) of this embodiment and an aqueous medium will be described with reference to the drawings.

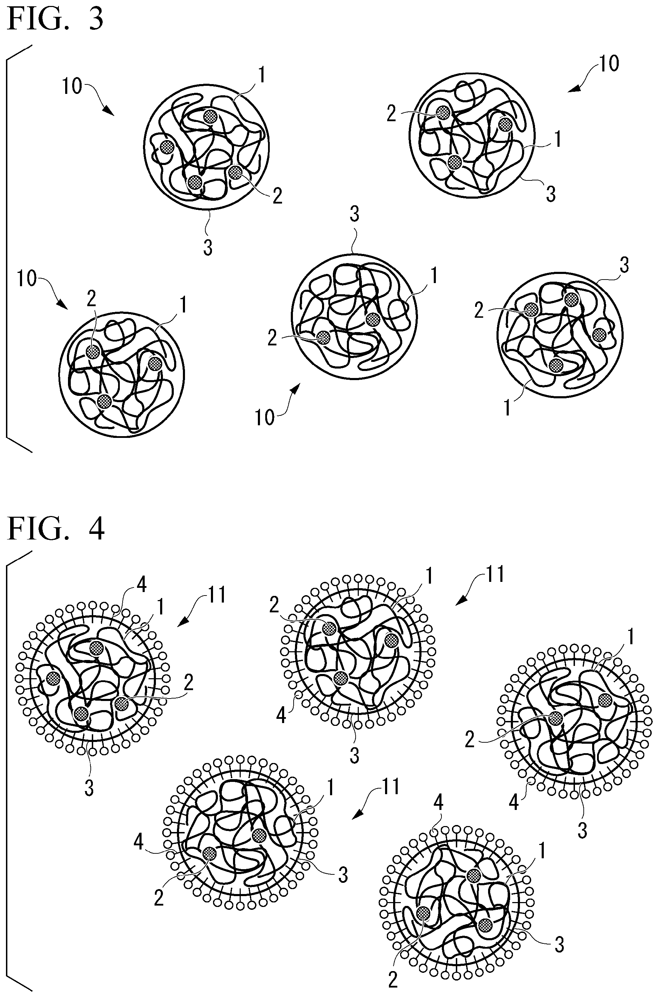

Figure 3 is a schematic diagram for explaining the state of a binder composition for a non-aqueous secondary battery containing the composite particle of this embodiment and an aqueous medium. The composite particle 10 shown in Figure 3 is produced using the production method of this embodiment having a polymerization step of copolymerizing a raw material monomer (a) containing a monomer (a1) and a monomer (a2) in the presence of the polyrotaxane 2 shown in Figure 2. As shown in Figure 3, the composite particle 10 contains the copolymer 1 and the polyrotaxane 2 shown in Figure 2, and is dispersed in an aqueous medium.

The copolymer 1 contained in the composite particle 10 shown in Figure 3 has a particulate structure (block structure) 3 made of random coil polymer chains, i.e., chain molecules, as one form presumed by the inventors, as shown in Figure 3. As one form presumed by the inventors, the polyrotaxane 2 has a particulate shape and is integrated with the particulate structure 3 made of chain molecules. More specifically, the polyrotaxane 2 contained in the composite particle 10 is in a state of being embedded in the particulate structure 3 made of chain molecules of the copolymer 1, as shown in Figure 3. The polyrotaxane 2 present in the particulate structure 3 is formed by surrounding the polyrotaxane 2 with the chain molecules of the copolymer 1 during the process in which the raw material monomer (a) mixed with the polyrotaxane 2 is made into the copolymer 1 in the polymerization step.

As shown in Figure 3, the polyrotaxane 2 contained in the composite particle 10 may be entirely present within the particulate structure 3, or a portion may be attached to the outer surface of the particulate structure 3. The content of polyrotaxane 2 contained in the composite particle 10 and the number of particles made of polyrotaxane 2 are not particularly limited, and can be changed depending on the size of the composite particle 10, the amount of polyrotaxane 2 used relative to the amount of raw material monomer (a) used in the production of the composite particle 10, and the like, and can be appropriately determined depending on the application.

As one embodiment, the binder composition for non-aqueous secondary batteries containing the composite particle 10 shown in Figure 3 and an aqueous medium is a soap-free emulsion that does not contain a surfactant, and the composite particle 10 is dispersed in the aqueous medium. The binder composition for non-aqueous secondary batteries containing the composite particle 10 that does not contain a surfactant can be produced, for example, by using a soap-free emulsion polymerization method that does not use a surfactant when producing the composite particle 10. Specifically, the soap-free emulsion polymerization method can be a method in which a monomer having a functional group such as a carboxy group and/or a polymerizable surfactant having radical polymerizability is used as the raw material monomer (a) containing the monomer (a1) and the monomer (a2).

The composite particle (P) of the present embodiment may be any particle containing a copolymer 1 and a polyrotaxane 2, and may be a composite particle 10 that does not have a surfactant 4, as shown in Figure 3, or a composite particle **11** that has a surfactant, as shown in Figure 4.

Figure 4 is a schematic diagram for explaining the state of a binder composition for a non-aqueous secondary battery containing another composite particle of this embodiment and an aqueous medium.

The composite particle 11 shown in Figure 4 is an emulsified particle (dispersed particle) containing a copolymer **1,** a polyrotaxane 2, and a surfactant 4. Specifically, the composite particle **11** shown in Figure 4 has a surfactant 4 bonded with a hydrophilic group facing outward to the copolymer 1 forming the outer surface of the particulate structure 3. The surfactant 4 does not correspond to the raw material monomer (a) containing a polymerizable surfactant as the other monomer (a4) used in producing the composite particle 11, but is derived from a non-polymerizable surfactant (c).

When the electrode 20 shown in Figure 1 is formed using a binder composition for a non-aqueous secondary battery containing the composite particle 10 shown in Figure 3 and/or the composite particle 11 shown in Figure 4 and an aqueous medium, the binder 25 present between the electrode active materials 22 and between the electrode active material 22 and the current collector 23 contains the composite particle 10 and/or the composite particle 11. For this reason, a synergistic effect of the copolymer 1 contained in the composite particle 10 and/or the composite particle 11 and the polyrotaxane 2 shown in Figure 2 is fully exerted, resulting in an electrode 20 with good binding properties between the electrode active materials 22 and between the electrode active material 22 and the current collector 23.

**In** contrast, when an electrode is formed using a composition in which a copolymer produced in the same manner as the composite particle 11 shown in Figure 4 except that the copolymerization of the raw material monomer (a) was not carried out in the presence of polyrotaxane 2 and polyrotaxane 2 are dispersed in an aqueous medium in the presence of surfactant 4, sufficient adhesion between the electrode active materials and between the electrode active material and the current collector is not obtained, as shown below.

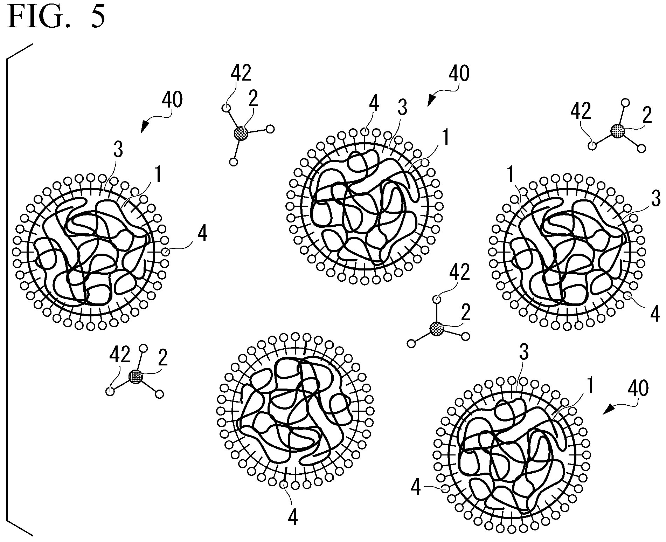

Figure 5 is a schematic diagram for explaining the state of a composition containing a copolymer particle 40 made of copolymer 1 produced in the same manner as composite particle **11** shown in Fig. 4, polyrotaxane 2, and an aqueous medium, except that copolymerization of raw material monomer (a) was performed without using polyrotaxane 2. Copolymer particle 40 shown in Fig. 5 is an emulsified particle containing copolymer 1 and surfactant 4. Polyrotaxane 2 shown in Fig. 5 is made into an emulsified particle by bonding with surfactant 42. Although Fig. 5 uses polyrotaxane 2 made into an emulsified particle by bonding with surfactant 42 as an example for explanation, polyrotaxane 2 may not be bonded to surfactant 42, and may be dispersed in an aqueous medium by having a hydrophilic group, for example.

In the composition shown in Figure 5, the copolymer particles 40 containing the copolymer 1 and the polyrotaxane 2 are present in an aqueous medium at a distance from each other. This is because the copolymer particles 40 in the form of emulsified particles and the polyrotaxane 2 in the form of emulsified particles are electrically repelled from each other, so that the dispersion of the copolymer particles 40 and the polyrotaxane 2 is maintained. Therefore, when an electrode is formed using the composition shown in Figure 5, the copolymer 1 and the polyrotaxane 2 forming the copolymer particles 40 are likely to be arranged in a separated state between the electrode active materials forming the electrode and between the electrode active materials and the current collector. As a result, the synergistic effect of the copolymer 1 and the polyrotaxane 2 is not sufficiently obtained, resulting in an electrode with insufficient binding between the electrode active materials and between the electrode active materials and the current collector.

Moreover, the composition shown in Figure 5 contains a surfactant 42 for dispersing the polyrotaxane 2 in an aqueous medium, in addition to the surfactant 4 used in producing the copolymer particle 40. In this case, the content of the surfactant contained in the composition is higher than that of a composition containing, for example, the composite particle 10 shown in Figure 3 or the composite particle 11 shown in Figure 4, and the surfactant is more likely to remain as an impurity in the electrode. As a result, this may adversely affect the cycle characteristics of a battery provided with the electrode, causing a decrease in the cycle characteristics of the battery.

For these reasons, when an electrode is formed using the composition shown in Figure 5, a nonaqueous secondary battery having excellent cycle characteristics cannot be obtained.

Furthermore, the present inventors produced an electrode using the above composite particles (P) as a binder for a nonaqueous secondary battery, and confirmed that the cycle characteristics of a nonaqueous secondary battery having this electrode were excellent, thereby conceiving the present invention.

The composite particles, binder composition for non-aqueous secondary batteries, slurry for non-aqueous secondary battery electrodes, non-aqueous secondary battery electrodes, non-aqueous secondary batteries, and methods for producing composite particles of the present invention will be described in detail below. Note that the present invention is not limited to the following embodiments.

Here, the following terms used in this specification will be explained. "(Meth)acrylic" is a general term for acrylic and methacrylic. "(Meth)acrylate" is a general term for acrylate and methacrylate.

The term "ethylenically unsaturated bond" refers to an ethylenically unsaturated bond having radical polymerizability, unless otherwise specified.

In a polymer using a compound having an ethylenically unsaturated bond, a structural unit derived from the compound having an ethylenically unsaturated bond means a structural unit in which the chemical structure of the portion other than the ethylenically unsaturated bond in the compound having an ethylenically unsaturated bond is the same as the chemical structure of the portion in the polymer other than the portion corresponding to the ethylenically unsaturated bond of the structural unit. The ethylenically unsaturated bond of the compound is changed to a single bond when forming a polymer. For example, in a polymer of methyl methacrylate, the structural unit derived from methyl methacrylate is represented by -CH ₂ -C(CH ₃ )(COOCH ₃ )-.

In the case of a polymer of a compound having an ionic functional group and an ethylenically unsaturated bond, for example, a structural unit having an ionic functional group such as a carboxyl group, such as the second structural unit described below, is considered to be a structural unit derived from the same ionic compound, regardless of whether a part of the functional group has been ion-exchanged or not. For example, a structural unit represented by -CH ₂ -C(CH ₃ )(COONa)- may also be considered to be a structural unit derived from methacrylic acid.

In addition, for a compound having multiple independent ethylenically unsaturated bonds, one or more ethylenically unsaturated bonds may remain in the structural unit of the polymer of the compound. For example, in the case of a polymer of divinylbenzene, the structural unit derived from divinylbenzene may be a structure without an ethylenically unsaturated bond (the parts corresponding to the two ethylenically unsaturated bonds of divinylbenzene are both incorporated into the polymer chain), or may be a structure with one ethylenically unsaturated bond (the part corresponding to only one of the ethylenically unsaturated bonds is incorporated into the polymer chain).Here, the multiple independent ethylenically unsaturated bonds refer to multiple ethylenically unsaturated bonds that do not form conjugated dienes with each other.

Furthermore, after polymerization, when a portion other than the chain structure corresponding to the ethylenically unsaturated bond in the polymer, for example, a functional group such as a carboxyl group, no longer corresponds to the chemical structure of the monomer due to a chemical reaction, the structural unit of the polymer is made to be a structural unit derived from a compound having an ethylenically unsaturated bond in the polymer. For example, when vinyl acetate is polymerized and then saponified, the structural unit of the polymer is made to be a structural unit derived from vinyl alcohol, not a structural unit derived from vinyl acetate, based on the chemical structure of the polymer.

In this embodiment, the term "class" attached to the name of a compound means a group of compounds that include the compound structure, and includes the compound having a substituent.

### <1. Composite particle (P)>

The composite particle (P) of the present embodiment is used as a binder for a non-aqueous secondary battery as one embodiment. The composite particle (P) of the present embodiment contains a copolymer and a polyrotaxane 2 shown in Figure 2. It is presumed that the chain molecules of the copolymer contained in the composite particle (P) of the present embodiment form a particulate structure.

The molecules of polyrotaxane 2 may be present either on the surface of the particulate structure made of the copolymer or inside the particulate structure, and it is preferable that at least a part of polyrotaxane 2 is present in the particulate structure made of chain molecules of the copolymer. The reason for this is that, compared with the case where all of the polyrotaxane 2 contained in the composite particle (P) is attached to the outer surface of the particulate structure, for example, the interaction between the polyrotaxane 2 and the chain molecules is promoted, and the synergistic effect between the copolymer and the polyrotaxane 2 is more easily exhibited. As a result, the composite particle (P) can form an electrode 20 with better binding properties between the electrode active materials 22 and between the electrode active material 22 and the current collector 23.

### (Copolymer)

The copolymer contained in the composite particle (P) of this embodiment has at least a first structural unit derived from the monomer (a1) shown below and a second structural unit derived from the monomer (a2) shown below.

The copolymer contained in the composite particle (P) of this embodiment may contain, in addition to the first structural unit and the second structural unit, a third structural unit derived from a monomer (a3) consisting of a compound having a plurality of independent ethylenically unsaturated bonds, which does not fall under the monomer (a1) or monomer (a2), and/or a fourth structural unit derived from another monomer (a4) which does not fall under any of the monomers (a1) to (a3).

### [First structural unit]

The first structural unit in the copolymer contained in the composite particle (P) of this embodiment is derived from the monomer (a1).

Monomer (a1) is a nonionic compound having only one ethylenically unsaturated bond . That is, monomer (a1) is a compound having neither an anionic functional group nor a cationic functional group. However, silane compounds are not included in monomer (a1). Monomer (a1) may be only one type of compound, or may be a combination of two or more types of compounds.

As the monomer (a1), it is preferable to use at least one of a (meth)acrylic acid ester and an aromatic compound having an ethylenically unsaturated bond, and it is more preferable to use a combination of both compounds. The (meth)acrylic acid ester is more preferably a (meth)acrylic acid alkyl ester. The number of carbon atoms in the alkyl group in the (meth)acrylic acid alkyl ester is preferably 1 to 20. In this case, a monomer (a1) other than the (meth)acrylic acid alkyl ester and the aromatic compound having an ethylenically unsaturated bond described later may be used in combination.

Examples of the (meth)acrylic acid alkyl ester contained in the (meth)acrylic acid ester used in the monomer (a1) include methyl (meth)acrylate, ethyl (meth)acrylate, n-propyl (meth)acrylate, isopropyl (meth)acrylate, n-butyl (meth)acrylate, tert-butyl (meth)acrylate, cyclohexyl (meth)acrylate, 2-ethylhexyl (meth)acrylate, isobornyl (meth)acrylate, lauryl (meth)acrylate, stearyl (meth)acrylate, etc. Among these, it is preferable to contain 2-ethylhexyl acrylate in order to obtain a composite particle (P) capable of forming an electrode active material layer having excellent electrolyte resistance.

Examples of aromatic compounds having an ethylenically unsaturated bond used in the monomer (a1) include styrene, t-butylstyrene, α-methylstyrene, p-methylstyrene, 1,1-diphenylethylene, etc. When the monomer (a1) contains an aromatic vinyl compound, it is more preferable that the monomer (a1) contains at least one of styrene and α-methylstyrene, and it is even more preferable that the monomer (a1) contains styrene, since this has excellent dispersibility in an aqueous medium, and a nonaqueous secondary battery having an electrode containing the binder for a nonaqueous secondary battery containing the composite particles (P) has better cycle characteristics.

Examples of the monomer (a1) other than the (meth)acrylic acid ester and the aromatic compound having an ethylenically unsaturated bond include a compound having an ethylenically unsaturated bond and a nonionic polar functional group, an aliphatic hydrocarbon compound having an ethylenically unsaturated bond, and an alicyclic hydrocarbon compound having an ethylenically unsaturated bond.

The polar functional group in the compound having an ethylenically unsaturated bond and a polar functional group used for the monomer (a1) preferably contains at least one of a hydroxy group and a cyano group, and more preferably contains a hydroxy group.

Examples of the compound having an ethylenically unsaturated bond and a polar functional group used in the monomer (a1) include 2-hydroxyethyl (meth)acrylate, 2-hydroxypropyl (meth)acrylate, and (meth)acrylonitrile. It is preferable to contain 2-hydroxyethyl methacrylate because good polymerization stability can be obtained when producing the composite particle (P).

### [Second structural unit]

The second structural unit in the copolymer contained in the composite particle (P) of this embodiment is derived from the monomer (a2).

The monomer (a2) is a compound having only one ethylenically unsaturated bond and a carboxy group. The monomer (a2) may be a single type of compound or a combination of two or more types of compounds.

The monomer (a2) may be a compound having a plurality of carboxy groups in one molecule, that is, the copolymer may contain a plurality of carboxy groups in one structural unit.

Examples of the monomer (a2) having a carboxy group include unsaturated monocarboxylic acids such as methacrylic acid, acrylic acid, and crotonic acid, and unsaturated dicarboxylic acids such as itaconic acid and fumaric acid. Among these, the monomer (a2) is preferably at least one of acrylic acid, methacrylic acid, and itaconic acid, because it forms composite particles (P) capable of forming an electrode 20 having good binding properties between the electrode active materials 22 and between the electrode active material 22 and the current collector 23.

At least a part of the structural unit derived from the monomer (a2) may form a salt with a basic substance. Examples of the monomer (a2) forming a salt include metal salts and ammonium salts of the monomer (a2). Examples of the metal salt include alkali metals such as lithium, sodium, and potassium. Specific examples of the compound include lithium (meth)acrylate, lithium itaconate, dilithium itaconate, sodium (meth)acrylate, sodium itaconate, disodium itaconate, ammonium (meth)acrylate, ammonium itaconate, and diammonium itaconate.

### [Third structural unit]

The copolymer contained in the composite particle (P) of this embodiment may have a third structural unit as an optional structural unit. The third structural unit is derived from the monomer (a3). The monomer (a3) is a compound having a plurality of independent ethylenically unsaturated bonds. "Independent" means that it is not a conjugated double bond such as that of 1,3-butadiene. Therefore, the monomer (a3) is a compound capable of forming a cross-linked structure in radical polymerization with the monomer (a1) and the monomer (a2). The monomer (a3) does not fall under either the monomer (a1) or the monomer (a2). As the monomer (a3), only one type of compound may be used, or two or more different types of compounds may be used.

Examples of the monomer (a3) include compounds having two ethylenically unsaturated bonds, such as divinylbenzene, ethylene glycol di(meth)acrylate, 1,6-hexanediol di(meth)acrylate, and 2-hydroxy-3-acryloyloxypropyl methacrylate, and compounds having three or more ethylenically unsaturated bonds, such as trimethylolpropane tri(meth)acrylate. The monomer (a3 ) is preferably at least one of divinylbenzene and trimethylolpropane triacrylate, because it provides good polymerization stability when producing the composite particle (P), and the nonaqueous secondary battery having the electrode 20 containing the binder for nonaqueous secondary batteries containing the composite particle (P) has a lower internal resistance and excellent cycle characteristics.

### [Other monomers (a4)]

The other monomer (a4) is a monomer that does not fall under any of the monomers (a1) to (a3). Examples of the other monomer (a4) include, but are not limited to, a compound having only one ethylenically unsaturated bond and having an anionic functional group other than a carboxyl group, such as a sulfo group or a phosphate group, a surfactant having an ethylenically unsaturated bond (hereinafter, sometimes referred to as a "polymerizable surfactant"), a compound having an ethylenically unsaturated bond and functioning as a silane coupling agent, and the like.

The compound having only one ethylenically unsaturated bond and having sulfo group includes aromatic vinyl compound having sulfo group, aromatic vinyl compound having sulfo group forming salt, etc. Among them, it is preferable to use at least one of p-styrenesulfonic acid and p-styrenesulfonic acid salt, and it is more preferable to use p-styrenesulfonic acid salt. It is more preferable to use sodium p-styrenesulfonate because it can obtain good polymerization stability when producing composite particle (P).

As the polymerizable surfactant, which is an example of the other monomer (a4), a compound having an ethylenically unsaturated bond and functioning as a surfactant can be used.

Examples of the polymerizable surfactant include compounds represented by the following chemical formulas (1) to (4).

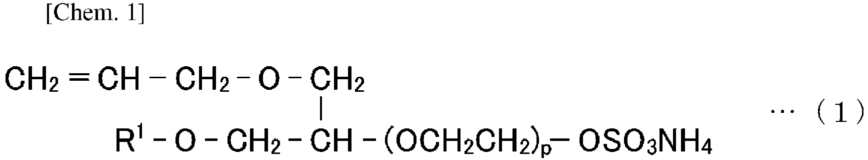

In formula (1), R¹ is an alkyl group. p is an integer of 10 to 40. R¹ is preferably an alkyl group having 10 to 40 carbon atoms, and more preferably a linear unsubstituted alkyl group having 10 to 40 carbon atoms.

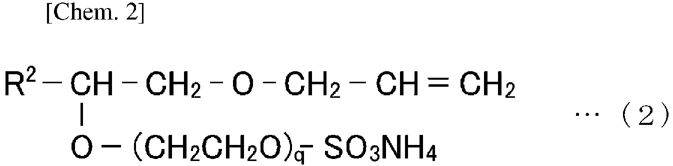

In formula (2), R² is an alkyl group. q is an integer of 10 to 12. R² is preferably an alkyl group having 10 to 40 carbon atoms, and more preferably a linear unsubstituted alkyl group having 10 to 40 carbon atoms. Examples of the compound represented by formula (2) include polyoxyethylene alkyl ether sulfate (Aqualon KH-10, manufactured by Dai-ichi Kogyo Seiyaku Co., Ltd.).

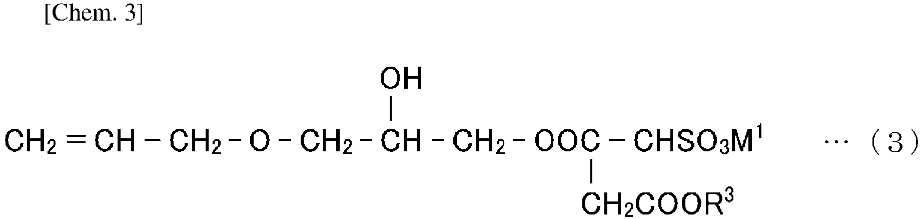

In formula (3), R³ is an alkyl group. M¹ is NH₄ or Na. R³ is preferably an alkyl group having 10 to 40 carbon atoms, and more preferably a linear unsubstituted alkyl group having 10 to 40 carbon atoms.

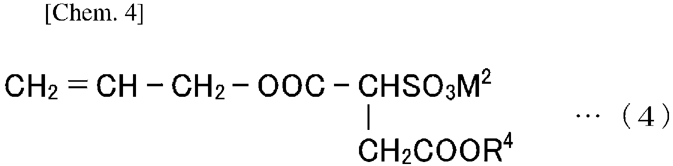

In formula (4), R⁴ is an alkyl group. M² is NH₄ or Na. R⁴ is preferably an alkyl group having 10 to 40 carbon atoms, and more preferably a linear unsubstituted alkyl group having 10 to 40 carbon atoms.

Examples of the other monomer (a4) that has an ethylenically unsaturated bond and functions as a silane coupling agent include vinyltrimethoxysilane, γ-methacryloxypropyltrimethoxysilane, vinyltriethoxysilane, and γ-methacryloxypropyltriethoxysilane.

### [Content of each structural unit in the copolymer]

The content of each structural unit in the copolymer contained in the composite particle (P) of this embodiment is deemed to be the same as the content of each monomer in the total amount of the monomer components used in the production of the composite particle (P).

### (Content of first structural unit in all structural units)

The content of the first structural unit in all structural units of the copolymer (in other words, the content of the monomer (a1) in the total amount of the monomer components used in the production of the composite particle (P)) is preferably 60% by mass or more, more preferably 70% by mass or more, even more preferably 75% by mass or more, and particularly preferably 80% by mass or more. This is because better polymerization stability can be obtained when producing the composite particle (P). The content of the first structural unit in all structural units is preferably 97% by mass or less, more preferably 95% by mass or less, and even more preferably 94% by mass or less. This is because the composite particle (P) can form an electrode 20 with good binding properties between the electrode active materials 22 and between the electrode active material 22 and the current collector 23.

Regarding the composition of the monomer (a1), it is preferable to appropriately adjust the type and amount of the compound in order to adjust the glass transition point of the composite particle (P) or to adjust the polymerization rate according to the molecular design.

Specifically, when the monomer (a1) contains an aromatic compound having an ethylenically unsaturated bond, the content of the structural unit derived from the aromatic compound having an ethylenically unsaturated bond in all structural units is preferably 36% by mass or more, more preferably 41% by mass or more, and even more preferably 43% by mass or more, because when a binder composition for a non-aqueous secondary battery containing the composite particle (P) is produced, the composite particle (P) has excellent dispersibility.

### (Content of second structural unit in all structural units)

The content of the second structural unit in all structural units of the copolymer (in other words, the content of the monomer (a2) in the total amount of the monomer components used in the production of the composite particle (P)) is preferably 0.10% by mass or more, more preferably 1.0% by mass or more, even more preferably 3.0% by mass or more, and particularly preferably 4.0% by mass or more. This is because the composite particle (P) can form an electrode 20 with better binding properties between the electrode active materials 22 and between the electrode active material 22 and the current collector 23. The content of the second structural unit in all structural units is preferably 20% by mass or less, more preferably 15% by mass or less, and even more preferably 10% by mass or less. This is because better polymerization stability can be obtained when producing the composite particle (P).

### (Content of third structural units in all structural units)

When the copolymer contained in the composite particle (P) of this embodiment contains a third structural unit, the content of the third structural unit in the total structural units of the copolymer (in other words, the content of the monomer (a3) in the total amount of the monomer components used in the production of the composite particle (P)) is preferably 0.010% by mass or more, more preferably 0.020% by mass or more, and more preferably 0.030% by mass or more. This is because the effect of the monomer (a3) as an internal crosslinking agent is significantly obtained, deterioration of the copolymer is suppressed, and the composite particle (P) can be used as a binder material for obtaining a non-aqueous secondary battery with better cycle characteristics. The content of the third structural unit in the total structural units of the copolymer is preferably 10% by mass or less, more preferably 5.0% by mass or less, even more preferably 1.0% by mass or less, and particularly preferably 0.1% by mass or less. This is because gelation of the copolymer can be suppressed.

### (Content of Fourth Structural Unit in All Structural Units)

When the copolymer contained in the composite particle (P) of this embodiment contains a fourth structural unit derived from another monomer (a4), and the other monomer (a4) is a compound having only one ethylenically unsaturated bond and having a sulfo group, the content of the fourth structural unit in the total structural units of the copolymer (in other words, the content of the monomer (a4) in the total amount of the monomer components used in the production of the composite particle (P)) is preferably 0.10 mass% or more, more preferably 0.20 mass% or more, and even more preferably 0.30 mass% or more. This is because good polymerization stability can be obtained when producing the composite particle (P). The content of the fourth structural unit in the total structural units of the copolymer is preferably 5.0 mass% or less, more preferably 3.0 mass% or less, and even more preferably 1.0 mass% or less. This is because the particle size, viscosity, etc. of the composite particle (P) can be appropriately adjusted.

When the copolymer of this embodiment contains a fourth structural unit derived from another monomer (a4), and the other monomer (a4) is a polymerizable surfactant, the content of the fourth structural unit in the total structural units of the copolymer (in other words, the content of the monomer (a4) in the total amount of the monomer components used in the production of the composite particle (P)) is preferably 0.01% by mass or more, more preferably 0.05% by mass or more, and even more preferably 0.08% by mass or more. This is because the effect of including the polymerizable surfactant becomes significant, and good polymerization stability is obtained when producing the composite particle (P). The content of the fourth structural unit in the total structural units of the copolymer is preferably 5.0% by mass or less, more preferably 3.0% by mass or less, even more preferably 1.0% by mass or less, and particularly preferably 0.5% by mass. This is because the particle size, viscosity, etc. of the composite particle (P) can be appropriately adjusted.

### (Polyrotaxane)

The polyrotaxane 2 of this embodiment contained in the composite particle (P) of this embodiment includes a cyclic molecule 51 having a cyclic skeleton and a chain molecule 53 that passes through the opening 55 of the cyclic molecule 51, as shown in FIG. 2. The chain molecule 53 has a stopper group 52 at both ends.
The polyrotaxane 2 does not have an ethylenically unsaturated bond. This is because the composite particle (P) can be easily manufactured.

The polyrotaxane 2 may be used alone or in combination of two or more kinds.

As shown in Figure 2, the cyclic molecule 51 of the polyrotaxane 2 has an opening 55 through which the chain molecule 53 can pass. The cyclic molecule 51 can move along the chain molecule 53 while being passed through by the chain molecule 53. The number of cyclic molecules 51 of one molecule of the polyrotaxane 2 is not particularly limited, and may be, for example, 1 to 500, 5 to 300, or 10 to 200. When the number of the cyclic molecules 51 is plural, the cyclic molecules 51 of the polyrotaxane 2 may be only one type, or may be two or more types. A modifying group 54 may be bonded to the cyclic skeleton of the cyclic molecule 51 as shown in Figure 2.

At least one of the cyclic skeletons of the cyclic molecule 51 is preferably a crown ether skeleton, a cyclic siloxane skeleton, or a cyclic oligosaccharide skeleton. Among these, the cyclic skeleton is more preferably a cyclic oligosaccharide skeleton. This is because the modifying group 54 can be easily introduced to the cyclic skeleton by reacting a hydroxy group of the cyclic skeleton with a predetermined compound having an epoxy group or the like. Among the cyclic oligosaccharide skeletons, the α-cyclodextrin skeleton is particularly preferable because the modifying group 54 can be more easily introduced thereto.

The modifying group 54 bonded to the cyclic skeleton of the cyclic molecule 51 may be any of various organic groups that do not have an ethylenically unsaturated bond. Examples of the organic group include a hydrocarbon group having one or more carbon atoms and which may have one or more substituents. Specific examples of the organic group include an acetyl group, a butyl ester group, a hexyl ester group, an octadecyl ester group, a hydroxyl group, an amino group, an amide group, a carboxy group, and a mercapto group.

The chain molecule 53 of the polyrotaxane 2 may be a straight chain or a branched chain.

The chain molecule 53 is preferably at least one selected from, for example, polyethylene glycol, polypropylene glycol, polyisoprene, polyisobutylene, polybutadiene, polytetrahydrofuran, polyacrylic acid ester, polydimethylsiloxane, polyethylene, polypropylene, and polycaprolactone, and is more preferably polyethylene glycol, since this results in a chain molecule 53 with good function of encapsulating the cyclic molecule 51 of the polyrotaxane 2.

The weight average molecular weight of the chain molecule 53 is preferably 5,000 to 50,000, and more preferably 7,500 to 40,000. When the weight average molecular weight of the chain molecule 53 is 5,000 or more, the length of the chain molecule 53 can be sufficiently secured. Therefore, in the binder polymer (P), the distance over which the cyclic molecule 51 can move relative to the chain molecule 53 becomes sufficiently long. As a result, the binder polymer (P) has better compliance with the expansion and contraction of the electrode active material. When the weight average molecular weight of the chain molecule 53 is 50,000 or less, the compatibility between the copolymer contained in the composite particle (P) and the polyrotaxane 2 is good, which is preferable.

The stopper group 52 of the polyrotaxane 2 has a function of preventing the cyclic molecule 51 from coming off the chain molecule 53 due to its bulkiness, ionicity, etc. The stopper groups 52 arranged at both ends of the chain molecule 53 may be the same or different from each other.

Examples of the stopper group 52 that prevents the cyclic molecule 51 from coming off the chain molecule 53 due to its bulkiness include groups having a ring structure. At least one of the stopper groups 52 is preferably a dinitrophenyl group, an adamantyl group, a trityl group, or a derivative group of any of these groups, and is more preferably an adamantyl group (which may be either a 1-adamantyl group or a 2-adamantyl group) in order to obtain a polyrotaxane 2 that can be easily produced. The stopper group 52 may further have one or more types of substituents. Examples of the substituent that the stopper group 52 may have include an alkyl group, an alkyloxy group, a hydroxy group, a halogen group, a cyano group, a sulfonyl group, a carboxy group, an amino group, and a phenyl group.

The weight-average molecular weight of polyrotaxane 2 is preferably 100,000 to 1,000,000, and more preferably 150,000 to 900,000. When the weight-average molecular weight of polyrotaxane 2 is 100,000 or more, the elasticity of composite particle (P) becomes suitable, which is preferable. When the weight-average molecular weight of polyrotaxane 2 is 1,000,000 or less, the compatibility between the copolymer contained in composite particle (P) and polyrotaxane 2 becomes good, which is preferable.

The polyrotaxane 2 can be produced by a known method.

A commercially available product may be used as the polyrotaxane 2. Examples of commercially available polyrotaxane 2 include "Cellm (registered trademark) Super Polymer SH2400P", "Cellm (registered trademark) Super Polymer SH1300P", and "Cellm (registered trademark) Super Polymer SH3400P", which are commercially available from Advanced Soft Materials Co., Ltd.

Among these commercially available polyrotaxanes 2, it is preferable to use SERM (registered trademark) Super Polymer SH2400P, which contains cyclic molecules 51 having a cyclic skeleton made of an α-cyclodextrin skeleton and chain molecules 53 made of polyethylene glycol with a weight-average molecular weight of 20,000 and having adamantyl groups as stopper groups 52 at both ends, and has a weight-average molecular weight of 400,000, in order to form composite particles (P) that can form an electrode 20 with better binding properties between electrode active materials 22 and between the electrode active material 22 and the current collector 23.

### [Content of Polyrotaxane 2 in Composite Particle (P)]

The content of polyrotaxane 2 relative to the amount of copolymer in the composite particle (P) of this embodiment is considered to be the same as the mass of polyrotaxane 2 relative to the total mass of the monomer components used in the production of the composite particle (P).

The content of polyrotaxane 2 relative to 100 parts by mass of the copolymer is preferably 0.10 parts by mass or more. This is because the effect of the composite particle (P) containing polyrotaxane 2 becomes significant, and as a result, the composite particle (P) can form an electrode 20 with better binding properties between the electrode active materials 22 and between the electrode active material 22 and the current collector 23. From the above viewpoint, the content of polyrotaxane 2 is more preferably 0.50 parts by mass or more, even more preferably 0.80 parts by mass or more, and particularly preferably 1.5 parts by mass or more. The content of polyrotaxane 2 may be 2.5 parts by mass or 5.0 parts by mass.

In addition, the content of polyrotaxane 2 relative to 100 parts by mass of the copolymer is preferably 50 parts by mass or less. This is because the content of the copolymer in the composite particle (P) can be sufficiently ensured, and a nonaqueous secondary battery equipped with an electrode 20 containing a binder for a nonaqueous secondary battery containing the composite particle (P) has a lower internal resistance. From the above viewpoint, the content of polyrotaxane 2 is more preferably 30 parts by mass or less, further preferably 15 parts by mass or less, and particularly preferably 10 parts by mass or less.

In summary, the content of polyrotaxane 2 relative to 100 parts by mass of the copolymer is preferably 0.10 parts by mass or more and 50 parts by mass or less, more preferably 0.50 parts by mass or more and 30 parts by mass or less, even more preferably 0.80 parts by mass or more and 15 parts by mass or less, and particularly preferably 1.5 parts by mass or more and 10 parts by mass or less.

[Glass transition temperature (Tg) of composite particles (P)] The glass transition temperature (Tg) of the composite particle (P) of the present embodiment is a peak top temperature of a differential scanning calorimetry (DDSC) chart obtained as a temperature derivative of DSC measured using a DSC device (EXSTAR DSC/SS7020 manufactured by Hitachi High-Tech Science Corporation) at a heating rate of 10°C/min under a nitrogen gas atmosphere.

The glass transition temperature (Tg) of the composite particles (P) is preferably - 30° C or higher, and more preferably -10°C or higher, because a nonaqueous secondary battery having an electrode containing the binder for nonaqueous secondary batteries containing the composite particles (P) has excellent cycle characteristics.

The glass transition temperature (Tg) of the composite particle (P) is preferably 100°C or lower, more preferably 50°C or lower, and further preferably 40°C or lower. This is because the film-formability of the composite particle (P) is improved, and a nonaqueous secondary battery having an electrode containing the binder for nonaqueous secondary batteries containing the composite particle (P) has excellent cycle characteristics.

### [Method for producing composite particles (P)]

The composite particle (P) of this embodiment can be produced, for example, by the method shown below.

The composite particle (P) can be produced by emulsion polymerizing raw material monomers including monomer (a1) and monomer (a2) and, as necessary, monomer (a3) made of a compound having a plurality of independent ethylenically unsaturated bonds and/or other monomer (a4) in the presence of polyrotaxane 2 (polymerization step). Hereinafter, the monomers (components (a1) to (a4)) used for synthesizing the composite particle (P) may be collectively referred to as raw material monomer (a).

An example of a method for emulsion polymerizing the raw material monomer (a) in the presence of polyrotaxane 2 is a method for emulsion polymerizing the raw material monomer (a) in an aqueous medium (b) containing polyrotaxane 2. When producing the composite particle (P) by emulsion polymerization, in addition to polyrotaxane 2, the raw material monomer (a), and the aqueous medium (b), components such as a non-polymerizable surfactant (c), a basic substance (d), a radical polymerization initiator (e), and a chain transfer agent (f) can be used.

In this embodiment, the case where the composite particle (P) is produced by emulsion polymerization of the raw material monomer (a) in the presence of polyrotaxane 2 has been described as an example, but the method for producing the composite particle (P) is not limited to the above-mentioned method. For example, instead of the emulsion polymerization method, the raw material monomer (a) may be copolymerized in the presence of polyrotaxane 2 using a suspension polymerization method, a solution polymerization method, a bulk polymerization method, or the like. **In** addition, when producing the composite particle (P), a continuous polymerization method or a batch polymerization method may be used.

### [Aqueous medium (b)]

The aqueous medium (b) is one selected from the group consisting of water, a hydrophilic solvent, and a mixture containing water and a hydrophilic solvent. Examples of the hydrophilic solvent include methanol, ethanol, isopropyl alcohol, and N-methylpyrrolidone. From the viewpoint of polymerization stability, the aqueous medium (b) is preferably water. As the aqueous medium (b), a mixture of water and a hydrophilic solvent may be used as long as the polymerization stability is not impaired.

### [Non-polymerizable surfactant (c)]

When the composite particle (P) is produced by emulsion polymerization, a solution containing the polyrotaxane 2, the aqueous medium (b), and the raw material monomer (a) may contain a non-polymerizable surfactant (c) and undergo emulsion polymerization. The non-polymerizable surfactant (c) is a surfactant (c) that does not have a polymerizable unsaturated bond in its chemical structure. The surfactant (c) improves the dispersion stability of the solution during emulsion polymerization and/or the dispersion liquid ( emulsion ) obtained after polymerization . As the surfactant (c), it is preferable to use an anionic surfactant or a nonionic surfactant.

Examples of the anionic surfactant include alkylbenzenesulfonates, alkyl sulfates, polyoxyethylene alkyl ether sulfates, and fatty acid salts.

Examples of the nonionic surfactant include polyoxyethylene alkyl ethers, polyoxyethylene alkyl phenyl ethers, polyoxyethylene polycyclic phenyl ethers, polyoxyalkylene alkyl ethers, sorbitan fatty acid esters, and polyoxyethylene sorbitan fatty acid esters.

The above surfactants (c) may be used alone or in combination of two or more.

### [Basic substance (d)]

When the composite particle (P) is produced by emulsion polymerization, a basic substance (d) may be added to the solution to be emulsion-polymerized containing the polyrotaxane 2, the aqueous medium (b), and the raw material monomer (a), and/or the dispersion after emulsion polymerization. By adding the basic substance (d), the acidic components contained in the raw material monomer (a) are neutralized. As a result, the pH of the solution during emulsion polymerization and/or the dispersion after emulsion polymerization falls within an appropriate range, and the stability of the solution during emulsion polymerization and/or the dispersion after emulsion polymerization becomes good.

Examples of the basic substance (d) to be added to the solution to be emulsion polymerized and/or the dispersion liquid after emulsion polymerization include ammonia, triethylamine, sodium hydroxide, lithium hydroxide, etc. These basic substances (d) may be used alone or in combination of two or more.

### [Radical Polymerization Initiator (e)]

The radical polymerization initiator (e) used in producing the composite particles (P) by emulsion polymerization is not particularly limited, and any known initiator may be used . Examples of the radical polymerization initiator (e) include persulfates such as ammonium persulfate and potassium persulfate, hydrogen peroxide, azo compounds, and organic peroxides such as tert-butyl hydroperoxide, tert-butyl peroxybenzoate, and cumene hydroperoxide.

**In** this embodiment, when the composite particles (P) are produced by emulsion polymerization, redox polymerization may be carried out by using a reducing agent such as sodium bisulfite, Rongalite, or ascorbic acid together with the radical polymerization initiator (e).

The amount of radical polymerization initiator (e) added (including the reducing agent when used in combination) is preferably 0.001 parts by mass or more, more preferably 0.002 parts by mass or more, relative to 100 parts by mass of raw material monomer (a). This is because the conversion rate of raw material monomer (a) to composite particle (P) can be increased when the composite particle (P) is produced by emulsion polymerization. The amount of radical polymerization initiator (e) added is preferably 10 parts by mass or less, more preferably 5 parts by mass or less, relative to 100 parts by mass of raw material monomer (a). This is because the molecular weight of the copolymer contained in the composite particle (P) can be increased, and the swelling rate of the non-aqueous secondary battery electrode containing the composite particle (P) of this embodiment with respect to the electrolyte can be reduced.

### [Chain transfer agent (f)]

The chain transfer agent (f) used in producing the composite particle (P) by emulsion polymerization is used to adjust the molecular weight of the copolymer forming the composite particle (P) obtained by emulsion polymerization. Examples of the chain transfer agent (f) include n-dodecyl mercaptan, tert-dodecyl mercaptan, n-butyl mercaptan, 2-ethylhexyl thioglycolate, 2-mercaptoethanol, β-mercaptopropionic acid, methyl alcohol, n-propyl alcohol, isopropyl alcohol, t-butyl alcohol, and benzyl alcohol.

### [Emulsion Polymerization Method]

Examples of the emulsion polymerization method used in producing the composite particles (P) include a method of emulsion polymerization while continuously supplying each component used in the emulsion polymerization into a reaction vessel. The temperature of the emulsion polymerization is not particularly limited, but is, for example, 30 to 90°C, preferably 50 to 85°C, and more preferably 55 to 80°C. It is preferable to carry out the emulsion polymerization while stirring. It is also preferable to continuously supply the raw material monomer (a), polyrotaxane 2, and radical polymerization initiator (e) to the solution during emulsion polymerization so that the concentrations of the raw material monomer (a), polyrotaxane 2, and radical polymerization initiator (e) in the solution during emulsion polymerization are uniform.

### <2. Binders for non-aqueous secondary batteries>

The binder for a non-aqueous secondary battery of this embodiment includes the composite particles (P) of this embodiment. The electrode binder for a non-aqueous secondary battery may include other components in addition to the composite particles (P). Specifically, the electrode binder for a non-aqueous secondary battery may include, for example, a polymer, a surfactant, etc. other than the composite particles (P).

The binder for non-aqueous secondary batteries is made of components that remain without volatilization even when a step involving heating is performed in the manufacturing method for non-aqueous secondary batteries described later. Specifically, the components constituting the binder for non-aqueous secondary batteries are components that remain after weighing out 1 g of the binder composition for nonaqueous secondary batteries containing the composite particles (P), placing it on an aluminum dish with a diameter of 5 cm, placing it in a dryer, and drying it at 1 atmosphere (1013 hPa) and a temperature of 105°C for 1 hour while circulating air in the dryer.

The content of the composite particles (P) contained in the non-aqueous secondary battery binder is preferably 80% by mass or more, more preferably 90% by mass or more, even more preferably 95% by mass or more, and even more preferably 98% by mass or more, because the effect of containing the composite particles (P) becomes remarkable.

### <3. Binder composition for non-aqueous secondary battery>

The binder composition for a non-aqueous secondary battery of this embodiment contains the composite particles (P) of this embodiment and an aqueous medium (B). The binder composition for a non-aqueous secondary battery of this embodiment is preferably an emulsion in which the composite particles (P) are dispersed in the aqueous medium (B).

The binder composition for a non-aqueous secondary battery may contain other components in addition to the composite particles (P) and the aqueous medium (B). Specifically, the binder composition for a non-aqueous secondary battery may contain, for example, the above-mentioned components used in the synthesis of the composite particles (P).

### [Average particle diameter d50 of composite particles (P)]

The average particle diameter d50 of the composite particles (P) contained in the binder composition for a nonaqueous secondary battery of this embodiment is preferably 0.18 µm or more, more preferably 0.20 µm or more. When the average particle diameter d50 is 0.18 µm or more, an electrode in which the electrode active material layer is even less likely to peel off from the current collector can be formed.

The average particle diameter d50 of the composite particles (P) contained in the binder composition for non-aqueous secondary batteries of this embodiment is preferably 1.0 µm or less, more preferably 0.80 µm or less, even more preferably 0.60 µm or less, and particularly preferably 0.50 µm or less. When the average particle diameter d50 of the composite particles (P) is 1.0 µm or less, when an electrode sheet in which an electrode active material layer 24 is formed on a current collector 23 is pressed to produce an electrode containing the binder polymer (P), pressing can be performed under suitable pressing conditions. As a result, the electrode active material layer 24 can be more firmly bound to the current collector 23.

The average particle diameter d50 of the composite particles (P) of this embodiment can be adjusted by a known method, for example, by the amount of surfactant added when producing the composite particles (P) by emulsion polymerization, the selection of raw material monomers, etc.

The binder composition for non-aqueous secondary batteries of this embodiment may be a dispersion obtained by producing composite particles (P) by emulsion polymerization. That is, the binder composition for non-aqueous secondary batteries may be an emulsion containing composite particles (P) and an aqueous medium (B). The binder composition for non-aqueous secondary batteries of this embodiment may also be a dispersion obtained by dispersing composite particles (P) obtained by a method other than emulsion polymerization in an aqueous medium (B). In this case, a known method can be used as a method for dispersing the composite particles (P) in the aqueous medium (B).

### [Aqueous medium (B)]

The aqueous medium (B) in the binder composition for non-aqueous secondary batteries of this embodiment is water, a hydrophilic solvent, or a mixture thereof. Examples of the hydrophilic solvent include the same hydrophilic solvents as those exemplified as the aqueous medium (b) used in the synthesis of the composite particles (P). The aqueous medium (B) may be the same as or different from the aqueous medium (b) used in the synthesis of the composite particles (P).

When the binder composition for non-aqueous secondary batteries is an emulsion obtained by producing the composite particles (P) using an emulsion polymerization method, the aqueous medium (B) may be the aqueous medium (b) used in the synthesis of the composite particles (P). The aqueous medium (B) may be the aqueous medium (b) used in the synthesis of the composite particles (P) to which a new aqueous medium has been added. The aqueous medium (B) may be a medium in which a part or all of the aqueous medium (b) contained in the dispersion obtained by producing the composite particles (P) by the emulsion polymerization method is replaced with a new aqueous solvent. The new aqueous medium used in this case may have the same composition as the aqueous medium (b) used in the synthesis of the composite particles (P), or may have a different composition.

### [Non-volatile content of binder composition for non-aqueous secondary battery]

The non-volatile content of the binder composition for non-aqueous secondary batteries of this embodiment is preferably 20% by mass or more, more preferably 25% by mass or more, and even more preferably 30% by mass or more. This is to increase the amount of active ingredients contained in the binder composition for non-aqueous secondary batteries. The non-volatile content of the binder composition for non-aqueous secondary batteries can be adjusted by the content of the aqueous medium (B) contained in the binder composition for non-aqueous secondary batteries.

The non-volatile content of the binder composition for a non-aqueous secondary battery is preferably 80% by mass or less, more preferably 70% by mass or less, and even more preferably 60% by mass or less, because an increase in viscosity of the binder composition for a non-aqueous secondary battery is suppressed, and a slurry for a nonaqueous secondary battery electrode is easily prepared.

### <4. Non-aqueous secondary battery electrode slurry>

Next, the non-aqueous secondary battery electrode slurry of this embodiment will be described in detail. The non-aqueous secondary battery electrode slurry contains the composite particles (P) of this embodiment, an electrode active material, and an aqueous medium. The composite particles (P) and the electrode active material contained in the non-aqueous secondary battery electrode slurry are preferably dispersed in an aqueous medium. The non-aqueous secondary battery electrode slurry may contain a thickener, a conductive assistant, the above-mentioned components used in the synthesis of the composite particles (P) in addition to the composite particles (P), the electrode active material, and the aqueous medium.

### [Content of Composite Particles (P)]

The content of the composite particles (P) in the slurry for a non-aqueous secondary battery electrode is preferably 0.50 parts by mass or more, and more preferably 1.0 part by mass or more, relative to 100 parts by mass of the electrode active material, in order to fully exhibit the effect of including the composite particles (P).

The content of the composite particles (P) contained in the slurry for nonaqueous secondary battery electrodes is preferably 5.0 parts by mass or less, more preferably 4.0 parts by mass or less, and even more preferably 3.0 parts by mass or less, relative to 100 parts by mass of the electrode active material, because the content of the electrode active material contained in the slurry for non-aqueous secondary battery electrodes can be increased.

### [Electrode active material]

The electrode active material contained in the slurry for a non-aqueous secondary battery electrode is a material capable of intercalating/de-intercalating ions that serve as charge carriers such as lithium ions. The ions that serve as charge carriers are preferably alkali metal ions, more preferably lithium ions, sodium ions, or potassium ions, and even more preferably lithium ions.

When the non-aqueous secondary battery electrode produced using the slurry for non-aqueous secondary battery electrodes is a negative electrode, the electrode active material is a negative electrode active material. The negative electrode active material preferably includes at least one of a carbon material, a material containing silicon, and a material containing titanium. Examples of the carbon material used as the negative electrode active material include coke such as petroleum coke, pitch coke, and coal coke, carbonized organic polymers, and graphite such as artificial graphite and natural graphite. Examples of the silicon-containing material used as the negative electrode active material include silicon simple substance and silicon compounds such as silicon oxide. Examples of the titanium-containing material used as the negative electrode active material include lithium titanate. These materials used as the negative electrode active material may be used alone or in a mixed or composite form.

The negative electrode active material preferably contains at least one of a carbon material and a material containing silicon, and more preferably contains a carbon material, because the composite particles (P) contained in the non-aqueous secondary battery electrode slurry have a large effect of improving the binding between the negative electrode active materials and between the negative electrode active material and the current collector.

When the non-aqueous secondary battery electrode produced using the slurry for non-aqueous secondary battery electrodes is a positive electrode, the electrode active material is a positive electrode active material. As the positive electrode active material, a material having a more noble standard electrode potential than the negative electrode active material is used. Specifically, as the positive electrode active material, lithium composite oxides containing nickel such as Ni-Co-Mn-based lithium composite oxides, Ni-Mn-Al-based lithium composite oxides, and Ni-Co-Al-based lithium composite oxides, lithium cobalt oxide (LiCoO₂), spinel-type lithium manganate (LiMn₂O₄), olivine-type lithium iron phosphate, and chalcogen compounds such as TiS₂, MnO₂, MoO₃, and V₂O₅ can be mentioned. These materials used as the positive electrode active material may be used alone or in combination of two or more kinds.

### [Aqueous medium]

The aqueous medium contained in the slurry for non-aqueous secondary battery electrodes of this embodiment is one selected from the group consisting of water, a hydrophilic solvent, and a mixture containing water and a hydrophilic solvent. The hydrophilic solvent may be the same as the hydrophilic solvent exemplified as the aqueous medium (b) used in the synthesis of the composite particles (P). The aqueous medium contained in the slurry for non-aqueous secondary battery electrodes may be the same as or different from the aqueous medium (b) used in the synthesis of the composite particles (P).

### [Thickener]

Examples of thickeners that may be included in the slurry for non-aqueous secondary battery electrodes include celluloses such as carboxymethyl cellulose (CMC), hydroxyethyl cellulose, and hydroxypropyl cellulose, ammonium salts of celluloses, alkali metal salts of celluloses, polyvinyl alcohol, polyvinylpyrrolidone, etc. The thickener preferably contains at least one of carboxymethyl cellulose, ammonium salts of carboxymethyl cellulose, and alkali metal salts of carboxymethyl cellulose. This is because the electrode active material in the slurry for non-aqueous secondary battery electrodes becomes more easily dispersed.

The content of the thickener in the slurry for a non-aqueous secondary battery electrode is preferably 0.50 parts by mass or more, and more preferably 0.80 parts by mass or more, relative to 100 parts by mass of the electrode active material, because this improves the binding between the electrode active materials contained in the nonaqueous secondary battery electrode prepared using the slurry for a non-aqueous secondary battery electrode, and between the electrode active material and the current collector.

The content of the thickener in the non-aqueous secondary battery electrode slurry is preferably 3.0 parts by mass or less, more preferably 2.0 parts by mass or less, and even more preferably 1.5 parts by mass or less, relative to 100 parts by mass of the electrode active material, because this improves the coatability of the non-aqueous secondary battery electrode slurry.

### [Conductive assistant]

Examples of the conductive assistant that may be included in the slurry for nonaqueous secondary battery electrodes of this embodiment include carbon black and carbon fiber. Examples of carbon black include furnace black, acetylene black, Denka Black (registered trademark) (manufactured by Denka Co., Ltd.), Ketjen Black (registered trademark) (manufactured by Ketjen Black International Co., Ltd.), and the like. Examples of carbon fiber include carbon nanotubes and carbon nanofibers. A preferred example of carbon nanotubes is VGCF (registered trademark, manufactured by Showa Denko K.K.), which is a vapor grown carbon fiber.

### [Method for producing non-aqueous secondary battery electrode slurry]

As a method for producing the slurry for non-aqueous secondary battery electrodes of this embodiment, for example, a method of mixing the composite particles (P) of this embodiment, an electrode active material, an aqueous medium, a thickener that is contained as necessary, a conductive assistant that is contained as necessary, and other components that are contained as necessary can be mentioned. The mixing order of each component, which is the raw material of the slurry for non-aqueous secondary battery electrodes, is not particularly limited and can be appropriately determined. As a method for mixing each component, a method using a mixing device such as a stirring type, a rotating type, or a shaking type can be mentioned.

### <5. Non-aqueous secondary battery electrode>

Next, the non-aqueous secondary battery electrode of this embodiment will be described in detail. The electrode of this embodiment includes the composite particles (P) of this embodiment. The electrode of this embodiment includes a current collector and an electrode active material layer formed on the current collector. The shape of the electrode of this embodiment is not particularly limited, and may be, for example, a laminate or a wound body.

The area where the electrode active material layer is formed on the current collector is not particularly limited, and the electrode active material layer may be formed on the entire surface of the current collector, or may be formed only on a part of the surface of the current collector. When the current collector is in the shape of a plate, foil, or the like, the electrode active material layer may be formed on both surfaces of the current collector, or may be formed only on one surface.

### [Current collector]

The current collector is preferably a metal sheet having a thickness of 0.001 mm to 0.5 mm. Examples of metals forming the metal sheet include iron, copper, aluminum, nickel, stainless steel, etc. When the electrode of the present embodiment is a negative electrode of a lithium ion secondary battery, the current collector is preferably a copper foil.

### [Electrode active material layer]

The electrode active material layer includes the composite particles (P) of this embodiment and an electrode active material. The electrode active material layer may include a conductive assistant, a thickener, etc. The electrode active material, the conductive assistant, and the thickener may be the same as those exemplified as components of the slurry for non-aqueous secondary battery electrodes.

### [Method for producing non-aqueous secondary battery electrodes]

The electrode of this embodiment can be manufactured, for example, by the method shown below. First, the slurry for a non-aqueous secondary battery electrode of this embodiment is applied onto a current collector. Then, the slurry for a non-aqueous secondary battery electrode is dried. As a result, an electrode active material layer containing the composite particles (P) is formed on the current collector, and an electrode sheet is obtained. Then, the electrode sheet is cut to an appropriate size as necessary. By carrying out the above steps, the electrode of this embodiment is obtained.

The method of applying the non-aqueous secondary battery electrode slurry onto the current collector is not particularly limited, but examples thereof include the reverse roll method, direct roll method, doctor blade method, knife method, extrusion method, curtain method, gravure method, bar method, dip method, squeeze method, etc. Among these application methods, in consideration of the physical properties such as viscosity of the non-aqueous secondary battery electrode slurry and drying property, it is preferable to use any method selected from the direct roll method, doctor blade method, knife method, and extrusion method. This is because an electrode active material layer having a smooth surface and small thickness variation can be obtained.

When the non-aqueous secondary battery electrode slurry is applied to both sides of the current collector, it may be applied to each side sequentially or simultaneously. In addition, the non-aqueous secondary battery electrode slurry may be applied to the current collector continuously or intermittently.

The amount of the non-aqueous secondary battery electrode slurry to be applied can be appropriately determined depending on the design capacity of the battery and the composition of the non-aqueous secondary battery electrode slurry, etc.

The method for drying the nonaqueous secondary battery electrode slurry applied onto the current collector is not particularly limited, and for example, a method selected from hot air, reduced pressure or vacuum environment, (far) infrared rays, and low temperature air can be used alone or in combination.

The drying temperature and drying time when drying the non-aqueous secondary battery electrode slurry can be appropriately adjusted depending on the non-volatile content concentration in the non-aqueous secondary battery electrode slurry, the amount of the slurry applied to the current collector, etc. The drying temperature is preferably 40°C or more and 350°C or less, and more preferably 60°C or more and 100°C or less from the viewpoint of productivity. The drying time is preferably 1 minute or more and 30 minutes or less.

The electrode sheet in which the electrode active material layer is formed on the current collector may be cut to a size and shape appropriate for an electrode. The method for cutting the electrode sheet is not particularly limited, and for example, slitting, laser cutting, wire cutting, cutter, Thomson cutting, etc. can be used.

In this embodiment, the electrode sheet may be pressed as necessary before or after cutting the electrode sheet, which allows the electrode active material to be more firmly bound to the current collector and reduces the thickness of the electrode, thereby enabling the nonaqueous secondary battery to be made smaller.

The electrode sheet can be pressed by a general method, and it is particularly preferable to use a mold pressing method or a roll pressing method.

When the die pressing method is used, the pressing pressure is not particularly limited, but is preferably 0.5 t/cm² or more and 5 t/cm² or less.
When the roll press method is used, the press load is not particularly limited, but is preferably 0.5 t/cm or more and 8 t/cm or less, because this makes it possible to obtain the above-mentioned effects of pressing while suppressing a decrease in the insertion and desorption capacity of charge carriers such as lithium ions in the electrode active material.

### <6. Non-aqueous secondary battery>

Next, a lithium ion secondary battery will be described as a preferred example of the nonaqueous secondary battery according to this embodiment. Note that the configuration of the nonaqueous secondary battery of the present invention is not limited to the example shown below.

The lithium ion secondary battery of this embodiment has a positive electrode, a negative electrode, an electrolyte, and known components such as a separator that are provided as necessary, all of which are housed in an exterior body.

The shape of the lithium ion secondary battery may be any shape, such as a coin type, a button type, a sheet type, a cylindrical type, a rectangular type, or a flat type.

### [Positive and negative electrodes]

In the lithium ion secondary battery of the present embodiment, one or both of the positive electrode and the negative electrode are provided with an electrode active material layer containing the composite particle (P) of the present embodiment. In the lithium ion secondary battery of the present embodiment, of the positive electrode and the negative electrode, it is preferable that at least the negative electrode is provided with an electrode active material layer containing the composite particle (P).

In the lithium ion secondary battery of this embodiment, when only one of the positive electrode and negative electrode has an electrode active material layer containing the composite particle (P) of this embodiment, an electrode containing a known binder such as polyvinylidene fluoride is used instead of the composite particle (P) of this embodiment as the electrode that does not contain the composite particle (P) of this embodiment.

### [Electrolyte]

As the electrolyte, a non-aqueous liquid having ion conductivity is used. Examples of the electrolyte include a solution in which an electrolyte is dissolved in an organic solvent, an ionic liquid, etc., and the former is preferred because it is possible to obtain a lithium ion secondary battery having low manufacturing cost and low internal resistance .

As the electrolyte, an alkali metal salt can be used, and can be appropriately selected according to the type of electrode active material, etc. Examples of the electrolyte include LiClO₄, LiBF₆, LiPF₆, LiCF₃SO₃, LiCF₃CO₂, LiAsF₆, LiSbF₆, LiB₁₀Cl₁₀ , LiAlCl₄ , LiCl, LiBr, LiB(C₂H₅)₄, CF₃SO₃Li, CH₃SO₃Li, LiCF₃SO₃, LiC₄F₉SO₃, Li(CF₃SO₂)₂N, and aliphatic lithium carboxylate. Other alkali metal salts can also be used as the electrolyte.

The organic solvent for dissolving the electrolyte is not particularly limited, and examples thereof include carbonate compounds such as ethylene carbonate (EC), propylene carbonate (PC), diethyl carbonate (DEC), ethyl methyl carbonate (EMC), dimethyl carbonate (DMC), fluoroethylene carbonate (FEC), and vinylene carbonate (VC), nitrile compounds such as acetonitrile, and carboxylic acid esters such as ethyl acetate, propyl acetate, methyl propionate, ethyl propionate, and propyl propionate. These organic solvents may be used alone or in combination of two or more. Among these, it is preferable to use a combination of linear carbonate solvents as the organic solvent.

### [Exterior body]

The exterior body may be made of an aluminum laminate material made of aluminum foil and a resin film, but is not limited to this.

### EXAMPLES

The present invention will be specifically described below with reference to examples and comparative examples. The examples shown below are provided to facilitate understanding of the present invention. The present invention is not limited to these examples.

In the following examples, a negative electrode of a lithium ion secondary battery was prepared as an example of a nonaqueous secondary battery electrode of the present invention, and a lithium ion secondary battery was prepared as an example of a nonaqueous secondary battery. The effects of the present invention were confirmed by comparing with a negative electrode of a lithium ion secondary battery and a lithium ion secondary battery according to comparative examples.

Moreover, the water used in the following examples and comparative examples is ion-exchanged water unless otherwise specified.

### <1. Production of binder composition for non-aqueous secondary battery>

### (Examples 1 to 11, Comparative Example 2)

A monomer emulsion was prepared by mixing and emulsifying 200 parts by mass of water as an aqueous medium (b) with the raw material monomer (a) and polyrotaxane shown in Tables 1 to 5 in the mass ratios shown in Tables 1 to 5. Next, an aqueous solution was prepared by dissolving each of the radical polymerization initiators (e) shown in Tables 1 to 5 in 50 parts by mass of water in the amounts shown in Tables 1 to 5.

In a separable flask equipped with a cooling tube, a thermometer, a stirrer, and a dropping funnel, 150 parts by mass of water was placed and heated to 75°C The monomer emulsion and the aqueous solution in which the radical polymerization initiator (e) was dissolved were each continuously fed independently to the separable flask over a period of 3 hours at 75°C with stirring to carry out emulsion polymerization, thereby obtaining an emulsion.

The obtained emulsion was cooled to room temperature. Then, 133 parts by mass of water and 25% by mass of ammonia water (17 parts by mass of ammonia, 51 parts by mass of water) in the amounts shown in Tables 1 to 5 were added to the emulsion. In this manner, the nonaqueous secondary battery binder compositions of Examples 1 to 11 and Comparative Example 2 were produced, which were emulsions in which the dispersed particles of Examples 1 to 11 and Comparative Example 2 were dispersed in an aqueous medium.

### (Comparative Example 1)

A monomer emulsion was prepared by mixing and emulsifying 200 parts by mass of water as an aqueous medium (b) with the raw material monomer (a) shown in Table 5 in the mass ratio shown in Table 5. Next, an aqueous solution was prepared by dissolving the radical polymerization initiator (e) shown in Table 5 in 50 parts by mass of water in the amount shown in Table 5 .

Into a separable flask equipped with a cooling tube, a thermometer, a stirrer, and a dropping funnel, 150 parts by mass of water was placed and heated to 75°C The above monomer emulsion and the above aqueous solution having the radical polymerization initiator (e) dissolved therein were continuously fed into the separable flask over a period of 3 hours while being stirred at 75°C to carry out emulsion polymerization, thereby obtaining an emulsion.

The obtained emulsion was cooled to room temperature. Then, 133 parts by mass of water and 25% by mass of ammonia water in the amount shown in Table 5 were added to the emulsion. In this way, a binder composition for a non-aqueous secondary battery of Comparative Example 1 was produced, which is an emulsion in which emulsified particles containing the copolymer of Comparative Example 1 are dispersed in an aqueous medium. The emulsified particles in the emulsion of Comparative Example 1 contain the copolymer but do not contain polyrotaxane.

### (Comparative Example 3)

An emulsion of Comparative Example 3 was obtained in the same manner as in Comparative Example 1. Therefore, the emulsified particles in this emulsion contain the copolymer but do not contain the polyrotaxane.

The obtained emulsion was cooled to room temperature. Thereafter, the polyrotaxane shown in Table 5 was added to the emulsion in the amount shown in Table 5, and 123 parts by mass of water and 25% by mass of ammonia water in the amount shown in Table 5 were further added, followed by stirring for 30 minutes using a homodisper.

In this way, the nonaqueous secondary battery binder compositions of Comparative Example 3 were produced, each consisting of an emulsion in which the emulsion particles containing the copolymer and the polyrotaxane were each independently dispersed in an aqueous medium.

No dispersion abnormality, such as aggregation of the emulsion particles containing the copolymer and the polyrotaxane in the composition, was observed in the binder composition for nonaqueous secondary batteries of Comparative Example 3. That is, in Comparative Example 3, composite particles containing the copolymer of the present embodiment and the polyrotaxane were not formed, and the binder composition for nonaqueous secondary batteries of Comparative Example 3 does not contain composite particles containing the copolymer of the present embodiment and the polyrotaxane.

This is presumably because, in the binder composition for a nonaqueous secondary battery in Comparative Example 3, the emulsion particles containing a copolymer and the polyrotaxane in the composition repel each other in terms of charge, thereby maintaining the dispersion of each of the emulsion particles containing a copolymer and the polyrotaxane.

**[Table 1]**

| | Ingredients | | Compound name | Example 1 | | Example 2 | | Example 3 | |
|---|---|---|---|---|---|---|---|---|---|
| | | | | | *1 | | *1 | | *1 |
| Amount of ingredients used to prepare binder composition (parts by mass) | Raw material simple substance amount (a) | Monomer (a1) | Styrene | 188 | 59.5% | 150 | 50.1% | 188 | 59.5% |
| | | | Methyl methacrylate | | 0.0% | | 0.0% | | 0.0% |
| | | | Butyl acrylate | | 0.0% | | 0.0% | | 0.0% |
| | | | 2-Ethylhexyl acrylate | 164 | 29.3% | 202 | 38.1% | 164 | 29.3% |
| | | | 2-Hydroxyethyl methacrylate | 7.5 | 1.9% | 7.5 | 2.0% | 7.5 | 1.9% |
| | | Monomer (a2) | Acrylic acid | 15 | 6.9% | 15 | 7.2% | 15 | 6.9% |
| | | | Methacrylic acid | | 0.0% | | 0.0% | | 0.0% |
| | | | Itaconic acid | 8.0 | 2.0% | 8.0 | 2.1% | 8.0 | 2.0% |
| | | Monomer (a3) | Divinylbenzene | 0.2 | 0.1% | 0.2 | 0.1% | 0.2 | 0.1% |
| | | | Trimethylolpropane triacrylate | | 0.0% | | 0.0% | | 0.0% |
| | | Monomer (a4) | Sodium p-styrenesulfonate | 2.5 | 0.4% | 2.5 | 0.4% | 2.5 | 0.4% |
| | | | Polyoxyethylene alkyl ether sulfate | 1.7 | 0.07% | 1.7 | 0.1% | 1.7 | 0.1% |
| | Polyrotaxane | | SII2400P | 7.0 | 1.8 | 7.0 | 1.8 | 3.5 | 0.9 |
| | | | Addition timing | Before polymerization | | Before polymerization | | Before polymerization | |
| | Radical initiator (c) | | Potassium persulfate | 1.0 | | 1.0 | | 1.0 | |
| | | | Rongalit SFS | 0.6 | | 0.6 | | 0.6 | |
| | Basic substance (d) | | Ammonia | 17 | | 17 | | 17 | |
| | Aqueous medium (b) | | Water | 583 | | 583 | | 583 | |
| Evaluation | Binder composition | | Non-volatile content (mass%) | 40 | | 40 | | 40 | |
| | | | Glass transition temperature (°C) | 15 | | -2 | | 15 | |
| | Binder composition | | Particle size (d50) (µm) | 0.23 | | 0.25 | | 0.23 | |
| | Battery | | Internal resistance (DCR) (Ω) | 25 | | 25 | | 25 | |
| | | | Discharge retention rate after 500 cycles (%) | 85 | | 85 | | 82 | |

| | | | | | | | | | |
|---|---|---|---|---|---|---|---|---|---|
| *1 The numbers in the right column for the amount of raw material units (a) are the content (mass%) of each unit when the total amount of raw material units (a) is 100 mass parts. The numbers in the right column for polyrotaxane are the mass parts of polyrotaxane when the total amount of raw material units (a) is 100 mass parts. | | | | | | | | | |

**[TABLE 2]**

| | Ingredients | | Compound name | Example 4 | | Example 5 | | Example 6 | |
|---|---|---|---|---|---|---|---|---|---|
| | | | | | *1 | | *1 | | *1 |
| Amount of ingredients used to prepare binder composition (parts by mass) | Raw material simple substance amount (a) | Monomer (a1) | Styrene | 188 | 59.5% | 188 | 59.5% | | 0.0% |
| | | | Methyl methacrylate | | 0.0% | | 0.0% | 188 | 60.4% |
| | | | Butyl acrylate | | 0.0% | | 0.0% | | 0.0% |
| | | | 2-Ethylhexyl acrylate | 164 | 29.3% | 164 | 29.3% | 164 | 28.6% |
| | | | 2-Hydroxyethyl methacrylate | 7.5 | 1.9% | 7.5 | 1.9% | 7.5 | 1.9% |
| | | Monomer (a2) | Acrylic acid | 15 | 6.9% | 15 | 6.9% | 15 | 6.7% |
| | | | Methacrylic acid | | 0.0% | | 0.0% | | 0.0% |
| | | | Itaconic acid | 8.0 | 2.0% | 8.0 | 2.0% | 8.0 | 2.0% |
| | | Monomer (a3) | Divinylbenzene | 0.2 | 0.1% | 0.2 | 0.1% | 0.2 | 0.05% |
| | | | Trimethylolpropane triacrylate | | 0.0% | | 0.0% | | 0.0% |
| | | Monomer (a4) | Sodium p-styrenesulfonate | 2.5 | 0.4% | 2.5 | 0.4% | 2.5 | 0.4% |
| | | | Polyoxyethylene alkyl ether sulfate | 1.7 | 0.1% | 1.7 | 0.1% | 1.7 | 0.1% |
| | Polyrotaxane | | SH2400P | 15.0 | 3.9 | 35.0 | 9.0 | 7.0 | 1.8 |
| | | | Addition timing | Before polymerization | | Before polymerization | | Before polymerization | |
| | Radical initiator (e) | | Potassium persulfate | 1.0 | | 1.0 | | 1.0 | |
| | | | Rongalit SFS | 0.6 | | 0.6 | | 0.6 | |
| | Basic substance (d) | | Ammonia | 17 | | 17 | | 17 | |
| | Aqueous medium (b) | | Water | 583 | | 583 | | 583 | |
| Evaluation | Binder composition | | Non-volatile content (mass%) | 40 | | 40 | | 40 | |
| | | | Glass transition temperature (°C) | 15 | | 15 | | 15 | |
| | Binder composition | | | | | | | | |
| | | | Particle size (d50) (µm) | 0.21 | | 0.21 | | 0.21 | |
| | Battery | | Internal resistance (DCR) (Ω) | 25 | | 25 | | 22 | |
| | | | Discharge retention rate after 500 cycles (%) | 88 | | 90 | | 83 | |

| | | | | | | | | | |
|---|---|---|---|---|---|---|---|---|---|
| *1 The numbers in the right column for the amount of raw material units (a) are the content (mass%) of each unit when the total amount of raw material units (a) is 100 mass parts. The numbers in the right column for polyrotaxane are the mass parts of polyrotaxane when the total amount of raw material units (a) is 100 mass parts. | | | | | | | | | |

**[TABLE 3]**

| | Ingredients | | Compound name | Example 7 | | Example 8 | | Example 9 | |
|---|---|---|---|---|---|---|---|---|---|
| | | | | | *1 | | *1 | | *1 |
| Amount of ingredients used to prepare binder composition (parts by mass) | Raw material simple substance amount (a) | Monomer (a1) | Styrene | 152 | 43.4% | 192 | 60.7% | 188 | 60.1% |
| | | | Methyl methacrylate | | 0.0% | | 0.0% | | 0.0% |
| | | | Butyl acrylate | 200 | 46.4% | | 0.0% | | 0.0% |
| | | | 2-Ethylhexyl acrylate | | 0.0% | 168 | 30.0% | 164 | 29.6% |
| | | | 2-Hydroxyethyl methacrylate | 7.5 | 1.7% | | 0.0% | 7.5 | 1.9% |
| | | Monomer (a2) | Acrylic acid | 15 | 6.2% | 15 | 6.9% | | 0.0% |
| | | | Methacrylic acid | | 0.0% | | 0.0% | 15 | 5.8% |
| | | | Itaconic acid | 8.0 | 1.8% | 8.0 | 2.0% | 8.0 | 2.0% |
| | | Monomer (a3) | Divinylbenzene | 0.2 | 0.05% | 0.2 | 0.1% | 0.2 | 0.1% |
| | | | Trimethylolpropane triacrylate | | 0.0% | | 0.0% | | 0.0% |
| | | Monomer (a4) | Sodium p-styrenesulfonate | 2.5 | 0.4% | 2.5 | 0.4% | 2.5 | 0.4% |
| | | | Polyoxyethylene alkyl ether sulfate | 1.7 | 0.1% | 1.7 | 0.1% | 1.7 | 0.1% |
| | Polyrotaxane | | SH2400P | 7.0 | 1.8 | 7.0 | 1.8 | 7.0 | 1.8 |
| | | | Addition timing | Before polymerization | | Before polymerization | | Before polymerization | |
| | Radical initiator (e) | | Potassium persulfate | 1.0 | | 1.0 | | 1.0 | |
| | | | Rongalit SFS | 0.6 | | 0.6 | | 0.6 | |
| | Basic substance (d) | | Ammonia | 17 | | 17 | | 17 | |
| | Aqueous medium (b) | | Water | 583 | | 583 | | 583 | |
| Evaluation | Binder composition | | Non-volatile content (mass%) | 40 | | 40 | | 40 | |
| | | | Glass transition temperature (°C) | 15 | | 15 | | 15 | |
| | Binder composition | | | | | | | | |
| | | | Particle size (d50) (µm) | 0.21 | | 0.22 | | 0.29 | |
| | Battery | | Internal resistance (DCR) (Ω) | 25 | | 25 | | 21 | |
| | | | Discharge retention rate after 500 cycles (%) | 85 | | 85 | | 85 | |

| | | | | | | | | | |
|---|---|---|---|---|---|---|---|---|---|
| *1 The numbers in the right column for the amount of raw material units (a) are the content (mass%) of each unit when the total amount of raw material units (a) is 100 mass parts. The numbers in the right column for polyrotaxane are the mass parts of polyrotaxane when the total amount of raw material units (a) is 100 mass parts. | | | | | | | | | |

**[TABLE 4]**

| | Ingredients | | Compound name | Example 10 | | Example 11 | |
|---|---|---|---|---|---|---|---|
| | | | | | *1 | | *1 |
| Amount of ingredients used to prepare binder composition (parts by mass) | Raw material simple substance amount (a) | Monomer (a1) | Styrene | 188 | 59.5% | 188 | 59.5% |
| | | | Methyl methacrylate | | 0.0% | | 0.0% |
| | | | Butyl acrylate | | 0.0% | | 0.0% |
| | | | 2-Ethylhexyl acrylate | 164 | 29.3% | 164 | 29.3% |
| | | | 2-Hydroxyethyl methacrylate | 7.5 | 1.9% | 7.5 | 1.9% |
| | | Monomer (a2) | Acrylic acid | 15 | 6.9% | 15 | 6.9% |
| | | | Methacrylic acid | | 0.0% | | 0.0% |
| | | | Itaconic acid | 8.0 | 2.0% | 8.0 | 2.0% |
| | | Monomer (a3) | Divinylbenzene | | 0.0% | | 0.0% |
| | | | Trimethylolpropane triacrylate | 0.2 | 0.02% | | 0.0% |
| | | Monomer (a4) | Sodium p-styrenesulfonate | 2.5 | 0.4% | 2.5 | 0.4% |
| | | | Polyoxyethylene alkyl ether sulfate | 1.7 | 0.1% | 1.7 | 0.1% |
| | Polyrotaxane | | SH2400P | 7.0 | 1.8 | 7.0 | 1.8 |
| | | | Addition timing | Before polymerization | | Before polymerization | |
| | Radical initiator (e) | | Potassium persulfate | 1.0 | | 1.0 | |
| | | | Rongalit SFS | 0.6 | | 0.6 | |
| | Basic substance (d) | | Ammonia | 17 | | 17 | |
| | Aqueous medium (b) | | Water | 583 | | 583 | |
| Evaluation | Binder composition Binder composition | | Non-volatile content (mass%) | 40 | | 40 | |
| | | | Glass transition temperature (°C) | 15 | | 15 | |
| | | | Particle size (d50) (µm) | 0.23 | | 0.23 | |
| | Battery | | Internal resistance (DCR) (Ω) | 25 | | 28 | |
| | | | Discharge retention rate after 500 cycles (%) | 83 | | 83 | |

| | | | | | | | |
|---|---|---|---|---|---|---|---|
| *1 The numbers in the right column for the amount of raw material units (a) are the content (mass%) of each unit when the total amount of raw material units (a) is 100 mass parts. The numbers in the right column for polyrotaxane are the mass parts of polyrotaxane when the total amount of raw material units (a) is 100 mass parts. | | | | | | | |

**[TABLE 5]**

| | Ingredients | | Compound name | Comparative Example 1 | | Comparative Example 2 | | Comparative Example 3 | |
|---|---|---|---|---|---|---|---|---|---|
| | | | | | *1 | | *1 | | *1 |
| Amount of ingredients used to prepare binder composition (parts by mass) | Raw material simple substance amount (a) | Monomer (a1) | Styrene | 192 | 59.5% | 201 | 65.4% | 188 | 59.5% |
| | | | Methyl methacrylate | | 0.0% | | 0.0% | | 0.0% |
| | | | Butyl acrylate | | 0.0% | | 0.0% | | 0.0% |
| | | | 2-Ethylhexyl acrylate | 168 | 29.4% | 177 | 32.6% | 164 | 29.3% |
| | | | 2-Hydroxyethyl methacrylate | 7.5 | 1.9% | 7.5 | 2.0% | 7.5 | 1.9% |
| | | Monomer (a2) | Acrylic acid | 15 | 6.7% | | 0.0% | 15 | 6.9% |
| | | | Methacrylic acid | | 0.0% | | 0.0% | | 0.0% |
| | | | Itaconic acid | 8.0 | 2.0% | | 0.0% | 8.0 | 2.0% |
| | | Monomer (a3) | Divinylbenzene | 0.2 | 0.05% | 0.2 | 0.1% | 0.2 | 0.1% |
| | | | Trimethylolpropane triacrylate | | 0.0% | | 0.0% | | 0.0% |
| | | Monomer (a4) | Sodium p-styrenesulfonate | 2.5 | 0.4% | | 0.0% | 2.5 | 0.4% |
| | | | Polyoxyethylene alkyl ether sulfate | 1.7 | 0.1% | 1.7 | 0.1% | 1.7 | 0.1% |
| | Polyrotaxane | | SH2400P | | 0.0 | 7.0 | 1.8 | 7.0 | 1.8 |
| | | | Addition timing | - | | Before polymerization | | After polymerization | |
| | Radical initiator (e) | | Potassium persulfate | 1.0 | | 1.0 | | 1.0 | |
| | | | Rongalit SFS | 0.6 | | 0.6 | | 0.6 | |
| | Basic substance (d) | | Ammonia | 17 | | 17 | | 17 | |
| | Aqueous medium (b) | | Water | 583 | | 583 | | 583 | |
| Evaluation | Binder composition Binder composition | | Non-volatile content (mass%) | 40 | | 40 | | 40 | |
| | | | Glass transition temperature (°C) | 15 | | 15 | | 15 | |
| | | | Particle size (d50) (µm) | 0.23 | | 0.27 | | 0.27 | |
| | Battery | | Internal resistance (DCR) (Ω) | 25 | | 30 | | 25 | |
| | | | Discharge retention rate after 500 cycles (%) | 75 | | 70 | | 81 | |

| | | | | | | | | | |
|---|---|---|---|---|---|---|---|---|---|
| *1 The numbers in the right column for the amount of raw material units (a) are the content (mass%) of each unit when the total amount of raw material units (a) is 100 mass parts. The numbers in the right column for polyrotaxane are the mass parts of polyrotaxane when the total amount of raw material units (a) is 100 mass parts. | | | | | | | | | |

The polyoxyethylene alkyl ether sulfate salt of monomer (a4) shown in Tables 1 to 5 (Aqualon KH-10, manufactured by Dai-ichi Kogyo Seiyaku Co., Ltd.) is a polymerizable surfactant.

Rongalite SFS in the polymerization initiator (e) is a trade name of Rongalite manufactured by Sumitomo Seika Chemicals Co., Ltd.

The polyrotaxane shown in Tables 1 to 5 is CELME (registered trademark) Super Polymer SH2400P (manufactured by Advanced Soft Materials Co., Ltd.), which contains chain molecules (weight average molecular weight 20,000) made of polyethylene glycol and has a weight average molecular weight of 400,000.

The timing of addition shown in Tables 1 to 5 refers to the timing at which polyrotaxane was used in the production process of the binder composition. "Before polymerization" means that raw material monomer (a) was copolymerized in the presence of polyrotaxane. "After polymerization" means that polyrotaxane was added to an emulsion containing emulsified particles containing a copolymer obtained by copolymerizing raw material monomer (a).

The amount of ammonia as the basic substance (d) shown in Tables 1 to 5 is the amount of ammonia (parts by mass) contained in the ammonia water.

The amount of water as the aqueous medium (b) shown in Tables 1 to 5 is the total amount (parts by mass) of water contained in the non-aqueous secondary battery binder composition.

### <2. Evaluation of Composite Particles and Binder Composition for Non-Aqueous Secondary Batteries>

The glass transition temperature (Tg) and particle size (d50) of each of the composite particles of Examples 1 to **11** and Comparative Examples 1 to 3 were measured by the following method. The results are shown in Tables 1 to 5.

In addition, the non-volatile content of each of the non-aqueous secondary battery binder compositions of Examples 1 to **11** and Comparative Examples 1 to 3 was measured by the method described below. The results are shown in Tables 1 to 5.

### [Glass transition temperature (Tg)]

The non-aqueous secondary battery binder composition was applied onto a release PET (polyethylene terephthalate ) film and dried at 50°C for 5 hours to obtain a film having a thickness of 2 mm and made of the composite particles.

A square test piece measuring 2 mm in length and 2 mm in width was cut out from the obtained film. The test piece was sealed in an aluminum pan, and a differential scanning calorimeter (EXSTAR DSC/SS7020 manufactured by Hitachi High-Tech Science Corporation) was used to perform differential scanning calorimetry (DSC) measurement of the test piece in a nitrogen gas atmosphere at a heating rate of 10°C/min. The temperature range of the DSC measurement was -40°C to 200°C. The peak top temperature of the DDSC chart obtained as the temperature derivative of the DSC was then measured, and this temperature was taken as the glass transition temperature Tg (°C) of the composite particle.

### [Particle diameter (d50) of composite particles in binder composition for non-aqueous secondary batteries]

The nonaqueous secondary battery binder composition was measured by dynamic light scattering (DLS) using a NANOTORAC WAVE II (manufactured by Microtrack Bell Co., Ltd.) at room temperature to measure the particle diameter (d50) of the composite particles on a volume basis using the particle refractive index.

### [Non-volatile content]

1 g of the binder composition for non-aqueous secondary batteries was weighed, placed on an aluminum dish with a diameter of 5 cm, and placed in a dryer. The composition was dried for 1 hour at 1 atmosphere (1013 hPa) and a temperature of 105°C while circulating air in the dryer, and the mass of the remaining components was measured. The mass ratio (mass%) of the above components remaining after drying relative to the mass (1 g) of the binder composition for non-aqueous secondary batteries before drying was calculated, and this was taken as the non-volatile content concentration (mass%).

### <3. Production of non-aqueous secondary battery>

Negative electrodes were produced by the methods described below using the binder compositions for nonaqueous secondary batteries of Examples 1 to **11** and Comparative Examples 1 to 3, respectively, and lithium ion secondary batteries, which are the nonaqueous secondary batteries of Examples 1 to **11** and Comparative Examples 1 to 3, were produced using the negative electrodes.

### [Preparation of Positive Electrode]

Ninety four parts by mass of LiNi_{0.6}Mn_{0.2}Co_{0.2}O₂ as a positive electrode active material, 3 parts by mass of acetylene black as a conductive assistant, and 3 parts by mass of polyvinylidene fluoride as a binder were mixed to obtain a mixture, and 50 parts by mass of N -methylpyrrolidone was added to the obtained mixture and further mixed to obtain a positive electrode slurry.

An aluminum foil having a thickness of 15 µm was prepared as a positive electrode current collector. The positive electrode slurry was applied to both sides of the positive electrode current collector by a direct roll method. The amount of the positive electrode slurry applied to the positive electrode current collector was adjusted so that the thickness after the roll press treatment described below was 125 µm per side.

The positive electrode slurry applied to the positive electrode current collector was dried at 120°C for 5 minutes, and pressed by a roll press method using a roll press (manufactured by Thank Metals, press load 5 t/cm, roll width 7 cm) to obtain a positive electrode sheet having a positive electrode active material layer on both sides of the positive electrode current collector. The obtained positive electrode sheet was cut into a rectangle of 50 mm in length and 40 mm in width, and a conductive tab was attached to make a positive electrode.

### [Preparation of negative electrode (non-aqueous secondary battery electrode)]

Ninety six point nine parts by mass of artificial graphite (G49, manufactured by Jiangxi Zishen Technology Co., Ltd.) as a negative electrode active material, 3.6 parts by mass of any of the binder compositions for non-aqueous secondary batteries produced in Examples 1 to 11 and Comparative Examples 1 to 3 (1.4 parts by mass of non-volatile matter (binder polymer)), and 60 parts by mass of a 2% by mass aqueous solution of CMC (carboxymethylcellulose-sodium salt, manufactured by Nippon Paper Chemicals Co., Ltd., Sunrose (registered trademark) MAC500LC) were mixed, and 16 parts by mass of water was added and mixed using a planetary centrifugal mixer (ARE-310, manufactured by Thinky Corporation) to obtain a negative electrode slurry (slurry for non-aqueous secondary battery electrodes).

A copper foil having a thickness of 10 µm was prepared as a negative electrode current collector. The negative electrode slurry was applied to both sides of the negative electrode current collector by a direct roll method. The amount of the negative electrode slurry applied to the negative electrode current collector was adjusted so that the thickness of the negative electrode active material layer after the roll press treatment described below was 170 µm per side.

The negative electrode slurry applied to the negative electrode current collector was dried at 90°C for 10 minutes, and pressed by a roll press method using a roll press (manufactured by Thank Metals, press load 8 t/cm, roll width 7 cm). This resulted in a negative electrode sheet having a negative electrode active material layer on both sides of the negative electrode current collector. The obtained negative electrode sheet was cut into a rectangle of 52 mm in length and 42 mm in width, and a conductive tab was attached to form a negative electrode.

### [Preparation of non-aqueous secondary battery]

A separator (made of polyethylene, thickness 25 µm) made of a polyolefin-based porous film was interposed between the positive electrode and the negative electrode, and the positive electrode active material layer and the negative electrode active material layer were laminated so as to face each other, and the laminate was housed in an exterior body (battery pack) made of an aluminum laminate material. Then, an electrolyte was poured into the exterior body, vacuum impregnation was performed, and the battery was packed with a vacuum heat sealer to obtain a lithium ion secondary battery.

The electrolyte used was a mixture of 99 parts by mass of a solution in which LiPF6 was dissolved at a concentration of 1.0 mol/L in a mixed solvent containing ethylene carbonate (EC), ethyl methyl carbonate (EMC), and diethyl carbonate (DEC) in a volume ratio of EC:EMC:DEC = 30:50:20, and 1 part by mass of vinylene carbonate (VC).

### <4. Evaluation of non-aqueous secondary batteries>

The internal resistance and the discharge capacity retention rate after 500 cycles were evaluated by the following methods for each of the lithium ion secondary batteries of Examples 1 to 11 and Comparative Examples 1 to 3. The results are shown in Tables 1 to 5.

### [Internal resistance (DCR)]

The internal resistance (DCR (Ω)) of the lithium ion secondary battery was measured under the condition of 25°C by the following procedure. That is, the battery was charged at a constant current of 0.2 C from the rest potential until the voltage reached 3.6 V, and the state of charge was set to 50% of the initial capacity (SOC50%). Then, the battery was discharged for 60 seconds at current values of 0.2 C, 0.5 C, 1 C, and 2 C. The internal resistance DCR (Ω) at SOC50% was determined from the relationship between these four current values (values for 1 second) and voltage.

### [Discharge capacity retention rate after 500 cycles]

Charge and discharge were performed under the condition of 45°C, with one cycle consisting of a series of operations of steps (i) to (iv) shown below. The time integral value of the current in steps (i) and (ii) was taken as the charge capacity, and the time integral value of the current in step (iv) was taken as the discharge capacity. The discharge capacity at the first cycle and the discharge capacity at the 500th cycle were measured, and the discharge capacity retention rate after 500 cycles was calculated by the following formula. Discharge capacity retention rate (%)=100×(discharge capacity at 500th cycle/discharge capacity at 1st cycle)
(i) Charge at a current of 1 C until the voltage reaches 4.2 V (constant current (CC) charging).
(ii) Charge the battery at a voltage of 4.2 V until the current reaches 0.05 C (constant voltage (CV) charging). (iii) Leave the battery to stand for 30 minutes.
(iv) Discharge at a current of 1 C until the voltage reaches 2.75 V (constant current (CC) discharge).

### <5. Evaluation Results>

As shown in Tables 1 to 5, it was confirmed that the lithium ion secondary batteries of Examples 1 to 11 all had a higher capacity retention rate than the lithium ion secondary batteries of Comparative Examples 1 to 3. This is presumably because the composite particles contained in the negative electrodes of the lithium ion secondary batteries of Examples 1 to 11 contain a copolymer containing structural units derived from the monomers (a1) and (a2) shown in Tables 1 to 5, and a polyrotaxane shown in Tables 1 to 5.

More specifically, in Comparative Example 1, a negative electrode was produced using a non-aqueous secondary battery binder composition containing no polyrotaxane, in which emulsion particles containing a copolymer were dispersed in an aqueous medium, and it is presumed that this resulted in insufficient adhesion between the electrode active materials and between the electrode active materials and the current collector, resulting in a poor capacity retention rate.

In Comparative Example 2, the composite particles contained in the negative electrode contain a copolymer not containing a structural unit derived from the monomer (a2) and a polyrotaxane. For this reason, it is presumed that the effect of the copolymer in improving the binding between the electrode active materials and between the electrode active material and the current collector is insufficient, resulting in a poor capacity retention rate.

In addition, in Comparative Example 3, the capacity retention rate was inferior to that in Example 1 in which the same raw material monomer (a) was used and a negative electrode was produced using a binder composition for a nonaqueous secondary battery containing the same amount of polyrotaxane.

This is presumably because the binder composition for a nonaqueous secondary battery used in Comparative Example 3 was prepared by adding polyrotaxane to an emulsion containing emulsified particles containing a copolymer obtained by copolymerizing raw material monomer (a), and therefore the copolymer and polyrotaxane were not formed into composite particles, and the copolymer and polyrotaxane were arranged apart between the electrode active materials forming the electrodes and between the electrode active materials and the current collector, resulting in insufficient binding between the electrode active materials and between the electrode active materials and the current collector.

In addition, as shown in Tables 1 to 5, it was confirmed that the lithium ion secondary batteries of Examples 1 to **11** and Comparative Examples 1 to 3 had sufficiently low values for practical use in terms of the internal resistance, which is a secondary effect.

### INDUSTRIAL APPLICABILITY

The present invention provides composite particles that can be used as a binder material for forming electrodes that can provide non-aqueous secondary batteries with excellent cycle characteristics, and a method for producing the same.

It is possible to provide a binder composition for non-aqueous secondary batteries capable of forming electrodes for obtaining non-aqueous secondary batteries having excellent cycle characteristics, and a slurry for non-aqueous secondary battery electrodes.

It is possible to provide a nonaqueous secondary battery electrode which can provide a nonaqueous secondary battery having excellent cycle characteristics, and a nonaqueous secondary battery having the same and having excellent cycle characteristics.

### REFERENCE SINGS LIST

1 Copolymer
2 Polyrotaxane
3 Particulate structure
4, 42 Surfactants
10, 11 Composite Particles
20 Electrode
21 Thickener
22 Electrode active material
23 Current collector
24 Electrode active material layer
25 binder
40 Copolymer Particles
51 Cyclic molecules
52 Stopper Base
53 Chain molecules
54 Modifying group
55 Opening

## Claims

1. A composite particle comprising a copolymer and a polyrotaxane, wherein
the copolymer comprises:
a first structural unit derived from monomer (al); and
a second structural unit derived from monomer (a2),
the monomer (a1) is a nonionic compound having only one ethylenically unsaturated bond,
the monomer (a2) is a compound having a carboxy group and only one ethylenically unsaturated bond, and
the polyrotaxane has a cyclic molecule with a cyclic skeleton and a chain molecule passing through an opening of the cyclic molecule and having stopper groups at both ends, the polyrotaxane being free of an ethylenically unsaturated bond.

2. The composite particle according to claim 1, wherein at least a portion of the polyrotaxane is present within a particle structure consisting of chain molecules of the copolymer.

3. The composite particle according to claim 1, wherein at least one of the cyclic skeletons in the cyclic molecule is a crown ether skeleton, a cyclic siloxane skeleton, or a cyclic oligosaccharide skeleton.

4. The composite particle according to claim 1, wherein at least one of the cyclic skeletons in the cyclic molecule is an α-cyclodextrin skeleton.

5. The composite particle according to claim 1, wherein at least one of the stopper groups is a dinitrophenyl group, an adamantyl group, a trityl group, or a derivative group of any of these groups.

6. The composite particle according to claim 1, wherein at least one of the stopper groups is an adamantyl group.

7. The composite particle according to claim 1, wherein the chain molecule is at least one selected from the group consisting of polyethylene glycol, polypropylene glycol, polyisoprene, polyisobutylene, polybutadiene, polytetrahydrofuran, polyacrylic acid ester, polydimethylsiloxane, polyethylene, and polypropylene.

8. The composite particle according to claim 1, wherein at least one of the chain molecules is polyethylene glycol.

9. The composite particle according to claim 1, wherein the chain molecule has a weight average molecular weight of 5,000 to 50,000.

10. The composite particle according to claim 1, wherein a content of the polyrotaxane relative to 100 parts by mass of the copolymer is 0.10 parts by mass or more and 50 parts by mass or less.

11. The composite particle according to claim 1, wherein a content of the second structural unit in all structural units of the copolymer is 0.10% by mass or more and 20% by mass or less.

12. The composite particle according to claim 1, wherein the copolymer comprises a third structural unit derived from a monomer (a3), and the monomer (a3) is a compound having a plurality of independent ethylenically unsaturated bonds.

13. The composite particle according to claim 12, wherein a content of the third structural unit in all structural units of the copolymer is 0.010% by mass or more and 10% by mass or less.

14. The composite particle according to claim 1 or 2, which is used as a binder for a non-aqueous secondary battery.

15. A binder composition for a non-aqueous secondary battery, comprising the composite particle according to claim 1 or 2 and an aqueous medium.

16. The binder composition for a nonaqueous secondary battery according to claim 15, wherein an average particle diameter d50 of the composite particles is 0.18 µm or more and 1.0 µm or less.

17. A slurry for a non-aqueous secondary battery electrode comprising the composite particles according to claim 1 or 2, an electrode active material, and an aqueous medium.

18. A non-aqueous secondary battery electrode comprising the composite particle according to claim 1 or 2.

19. A non-aqueous secondary battery comprising the non-aqueous secondary battery electrode according to claim 18.

20. A method for producing composite particles, the method comprising: a polymerization step of emulsion-polymerizing raw material monomer (a) including monomer (a1) and monomer (a2) in presence of polyrotaxane, wherein
the monomer (a1) is a nonionic compound having only one ethylenically unsaturated bond,
the monomer (a2) is a compound having a carboxy group and having only one ethylenically unsaturated bond, and
the polyrotaxane has a cyclic molecule having a cyclic skeleton and a chain molecule passing through an opening of the cyclic molecule and has stopper groups at both ends,
the polyrotaxane being free of an ethylenically unsaturated bond.
